# EUROPEAN PATENT SPECIFICATION

(11) **EP 4 336 812 B1**
(45) Date of publication and mention of the grant of the patent: **11.02.2026**
(21) Application number: 23735959.1
(22) Date of filing: 14.06.2023
(51) Int. Cl.: H04M 1/02, H04M 1/23, G06F 1/16

(54) **ROLLABLE ELECTRONIC DEVICE COMPRISING KEY INPUT DEVICE**
ROLLBARE ELEKTRONISCHE VORRICHTUNG MIT TASTENEINGABEVORRICHTUNG
DISPOSITIF ÉLECTRONIQUE ENROULABLE COMPRENANT UN DISPOSITIF D'ENTRÉE À TOUCHES

(30) Priority: 27.07.2022 KR 20220092878; 13.09.2022 KR 20220114969
(43) Date of publication of application: 13.03.2024
(73) Proprietor: Samsung Electronics Co., Ltd., Suwon-si, Gyeonggi-do 16677 (KR)
(72) Inventor: KWAK, Myunghoon, Gyeonggi-do 16677 (KR); PARK, Jihea, Gyeonggi-do 16677 (KR); LEE, Junghyeob, Gyeonggi-do 16677 (KR)
(74) Representative: HGF
(86) International application number: PCT/KR2023/008166
(87) International publication number: WO 2024/025147

(56) References cited:
- WO-A1-2022/034941
- KR-A- 20060 023 233
- KR-A- 20210 146 095
- KR-A- 20220 018 163
- KR-A- 20220 040 372

## Description

### [Technical Field]

Various embodiments of the disclosure relate to a rollable electronic device including a key input device.

### [Background Art]

Owing to the development of information and communication technology and semiconductor technology, various functions are integrated in a single portable electronic device. For example, an electronic device may implement not only a communication function but also an entertainment function such as games, a multimedia function such as music/video playback, a communication and security function such as mobile banking, schedule management, and an electronic wallet function. Such electronic devices are generally designed to be small so that users may conveniently carry them.

As mobile communication services are extended to the multimedia service area, there is a need to increase the size of a display in an electronic device so that a user may conveniently use multimedia services as well as voice calls or short messages. However, there may be a trade-off between the preference to increase the size of the display of the electronic device and the preference to decrease the overall size of the electronic device.

WO 2022/034941 A1 discloses, according to its abstract, a flexible display device. The flexible display device comprises a first body, a second body, a flexible display, an adjustment key, a first sensor, a second sensor, a third sensor, and a fourth sensor. A first adjustment is performed when the first sensor or the third sensor senses a magnetic field of a magnet, and a second adjustment is performed when the second sensor or the fourth sensor senses a magnetic field of a magnet. Even though the adjustment key is not electrically connected to components in the first body, the sensors can sense the movement of the adjustment key.

### [Disclosure]

### [Technical Solution]

The scope of the present invention is determined according to the independent claim.

Various embodiments of the present invention are outlined in the dependent claims.

Also disclosed herein is an electronic device that may include a first housing including a first cover member and a frame located inside the first cover member, a second housing at least partially accommodated inside the first cover member and configured to move relative to the first housing, a display configured to be moved based on the movement of the second housing, a key input device including an elastic body connected to the first cover member and a magnetic body connected to the elastic body, and a sensor disposed on the frame and configured to detect a magnetic field of the magnetic body to determine a position of the key input device.

Also disclosed herein is an electronic device that may include a housing including a first housing including a first cover member and a frame located inside the first cover member, and a second housing at least partially surrounded by the first housing and configured to slidingly move with respect to the first housing, a display configured to be moved based on the sliding movement of the second housing, a key input device including an elastic body connected to the cover member and a magnetic body connected to the elastic body, and a sensor including a first magnetic field detection sensor configured to detect a magnetic field of the magnetic body at a first position and a second magnetic field detection sensor configured to detect the magnetic field of the magnetic body at a second position, and a processor configured to determine a position of the key input device based on a signal obtained by the sensor. The processor may be configured to slide the electronic device out based on a signal obtained by the first magnetic field detection sensor. The processor may be configured to slide the electronic device in based on a signal obtained by the second magnetic field detection sensor.

Also disclosed herein is a method of operating an electronic device that may include detecting a user input applied to a key input device including a magnetic body, determining whether a key recognition time exceeds a specified time, when the key recognition time exceeds the specified time, executing a slide function of the electronic device, determining key release of the key input device, and when the key release of the key input device is determined, ignoring the user input applied to the key input device.

### [Description of the Drawings]

FIG. 1 is a block diagram illustrating an electronic device in a network environment according to an embodiment of the disclosure.
FIG. 2 is a diagram illustrating a state in which a second display area of a display is accommodated inside a housing according to an embodiment of the disclosure.
FIG. 3 is a diagram illustrating a state in which a second display area of a display is exposed to the outside of a housing according to an embodiment of the disclosure.
FIG. 4 is an exploded perspective view illustrating an electronic device according to an embodiment of the disclosure.
FIG. 5A is a sectional view taken along a line A-A' of FIG. 2 according to an embodiment of the disclosure. FIG. 5B is a sectional view taken along a line B-B' of FIG. 3 according to an embodiment of the disclosure.
FIG. 6 is a perspective view illustrating a driving structure according to an embodiment of the disclosure.
FIG. 7 is an exploded perspective view illustrating an electronic device including a key input device according to an embodiment of the disclosure.
FIG. 8A is a front perspective view illustrating a key input device according to an embodiment of the disclosure. FIG. 8B is a rear perspective view illustrating the key input device according to an embodiment of the disclosure.
FIG. 9A is a projection view illustrating a key input device connected to a book cover according to an embodiment of the disclosure. FIG. 9B is a perspective view illustrating the key input device disposed inside the book cover according to an embodiment of the disclosure.
FIG. 10 is an exploded perspective view illustrating an electronic device including a key input device and a sensor according to an embodiment of the disclosure.
FIG. 11 is a top view illustrating an electronic device including a sensor and a key input device according to an embodiment of the disclosure.
FIG. 12A is a rear view illustrating an electronic device including a magnet sensor and a key input device in a slide-in state according to an embodiment of the disclosure. FIG. 12B is a rear view illustrating the electronic device including the magnet sensor and the key input device in a slide-out state according to an embodiment of the disclosure.
FIG. 13 is a sectional view illustrating an electronic device according to an embodiment of the disclosure.
FIG. 14 is a sectional view taken along a line C-C' according to an embodiment of the disclosure.
FIG. 15 is a sectional view taken along a line D-D' according to an embodiment of the disclosure.
FIGS. 16 and 17 are diagrams illustrating recognition of a magnetic body by a sensor according to an embodiment of the disclosure.
FIG. 18 is a diagram illustrating setting of an operation of an electronic device based on information obtained using a key input device according to an embodiment of the disclosure.
FIG. 19 is a flowchart illustrating an operation of an electronic device for reducing malfunctions according to an embodiment of the disclosure.
FIG. 20 is a flowchart illustrating an operation of an electronic device according to an embodiment of the disclosure.

### [Mode for Invention]

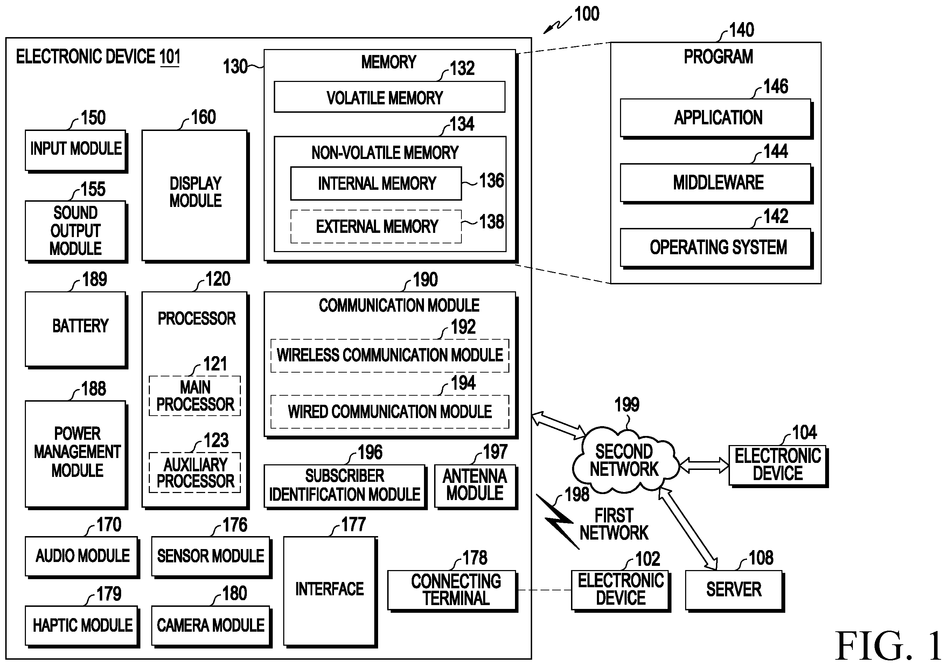

FIG. 1 is a block diagram illustrating an electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network) or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electric signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102).According to an embodiment, the connecting terminal 178 may include, for example, a HDMI connector, a USB connector, a SD card connector, or an audio connector (e.g., a headphone connector).

The haptic module 179 may convert an electric signal into a mechanical stimulus (e.g., a vibration or a movement) or electric stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with",or "connected to"another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

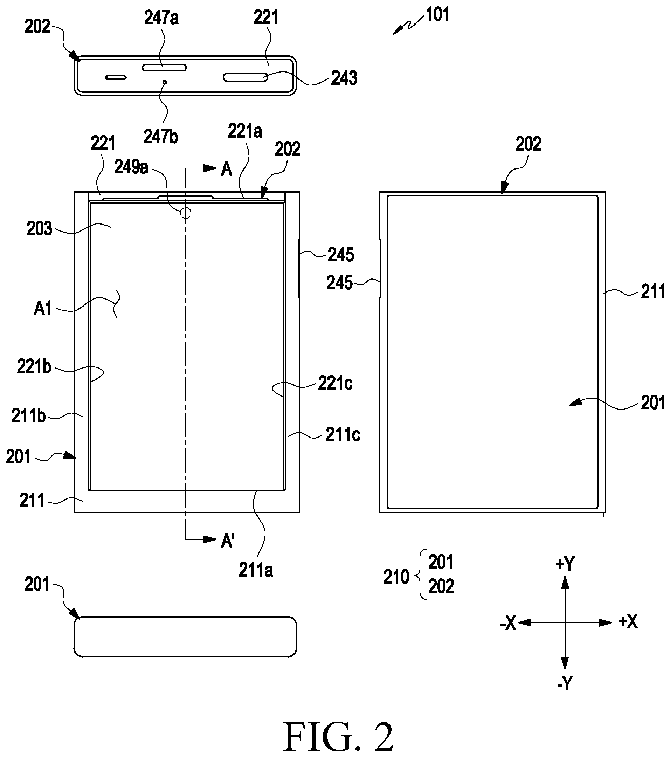

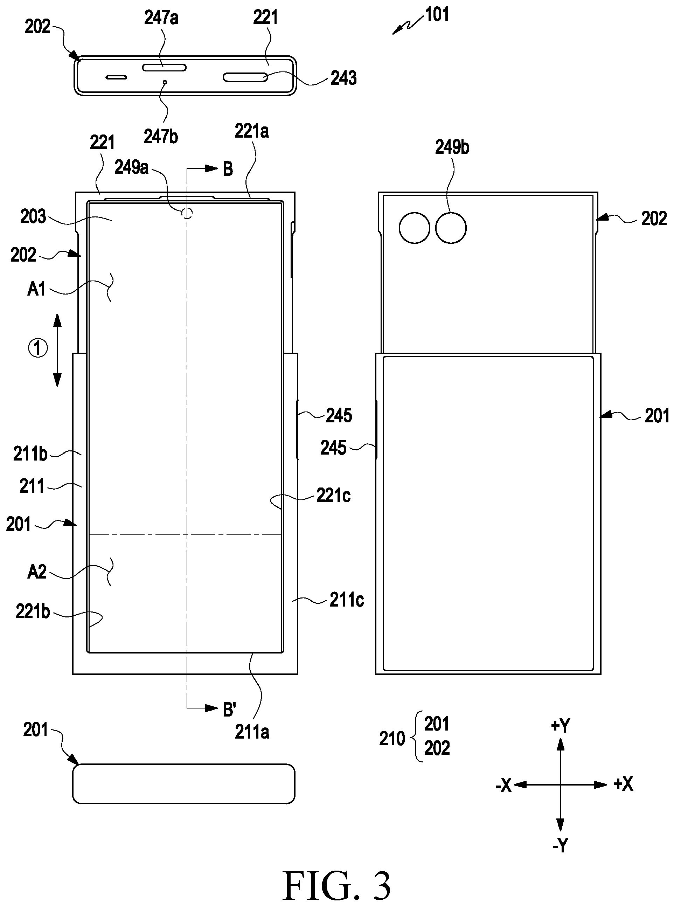

FIG. 2 is a diagram illustrating a state in which a second display area of a display is accommodated inside a housing according to an embodiment of the disclosure (for example, a closed state of the device). FIG. 3 is a diagram illustrating a state in which the second display area of the display is exposed to the outside of the housing according to an embodiment of the disclosure (for example, an open state of the device). It should be understood that FIGs. 2 and 3 show different states of the same electronic device 101, and that the electronic device 101 may be moveable between the states shown in FIGs. 2 and 3. It should also be understood that the electronic device 101 may exist in states other than those shown in FIGs. 2 and 3 (for example, the electronic device 101 may be provided in a state in between the states of FIGs. 2 and 3).

FIGS. 2 and 3 illustrate a structure in which a display 203 (e.g., a flexible display or a rollable display) extends in a longitudinal direction (e.g., a +Y direction), when viewed from the front of the electronic device 101. However, the extension direction of the display 203 is not limited to one direction (e.g., the +Y direction). For example, the design may be modified such that the display 203 is extensible in an upward direction (the +Y direction), a right direction (e.g., a +X direction), a left direction (e.g., a -X direction), and/or a downward direction (e.g., a -Y direction).

The state shown in FIG. 2 may be referred to as a slide-in state of the electronic device 101 or a closed state of a second display area A2 of the display 203.

The state shown in FIG. 3 may be referred to as a slide-out state of the electronic device 101 or an open state of the second display area A2 of the display 203.

Referring to FIGS. 2 and 3, the electronic device 101 may include a housing 210. The housing 210 may include a first housing 201 and a second housing 202 disposed to bemovable relative to the first housing 201. In some examples, the electronic device 101 may include a structure in which the first housing 201 is disposed to be slidable with respect to the second housing 202 in the electronic device 101. According to an embodiment, the second housing 202 may be disposed to reciprocablefor a predetermined distance in a direction shown with respect to the first housing 201, for example, in a direction indicated by an arrow ①. That is, the second housing 202 may be configured to be moveable with respect to the first housing 201 in the indicated direction. However, it should be understood that the second housing 202 may be moveable with respect to the first housing 201 in other directions.

According to an embodiment, the second housing 202 may be referred to as a slide part or a slide housing and may be configured to be movable relative to the first housing 201. According to an embodiment, the second housing 202 may accommodate various electric and electronic components such as a circuit board or a battery.

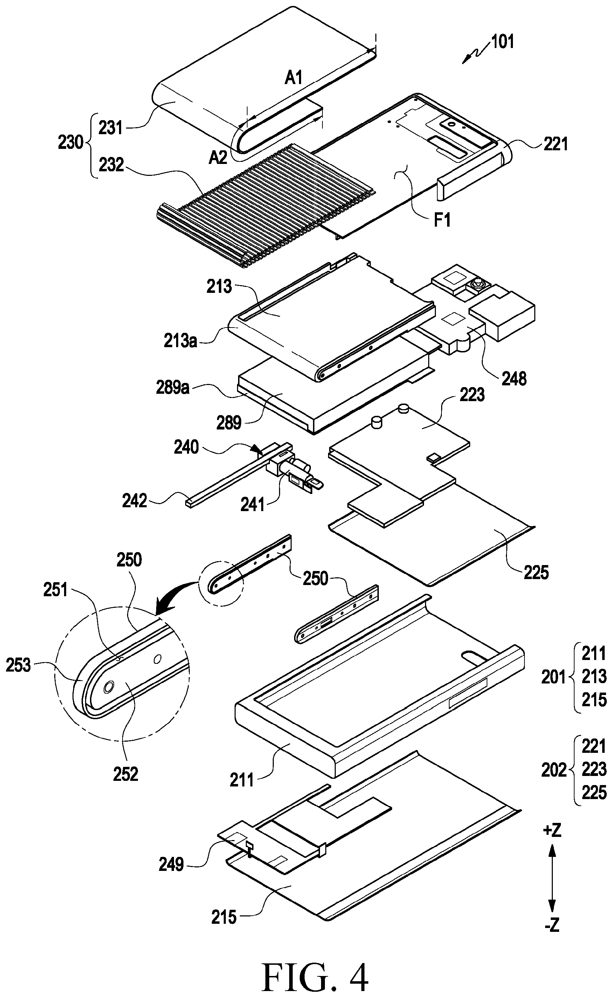

According to an embodiment, the first housing 201 may accommodate a motor, a speaker, a SIM socket, and/or a sub-circuit board (e.g., a second circuit board 249 of FIG. 4) electrically connected to a main circuit board. The second housing 202 may accommodate the main circuit board (e.g., a first circuit board 248 of FIG. 4) on which electric components such as an AP (e.g., application processor) and a CP(e.g, communication processor) are mounted. It should be understood that other electronic components may be provided, or that the examples provided above may be omitted.

According to an embodiment, the first housing 201 may include a first cover member 211. The first cover member 211 may include a(1-1)^{th}(or first) sidewall 211a, a(1-2)^{th}(or second) sidewall 211b extending from the (1-1)^{th} sidewall 211a, and a (1-3)^{th}(or third) sidewall 211c extending from the (1-1)^{th} sidewall 211a and substantially parallel to the (1-2)^{th} sidewall 211b. According to an embodiment, the (1-2)^{th} sidewall 211b and the (1-3)^{th} sidewall 211c may be formed substantially perpendicular to the (1-1)^{th} sidewall 211a. According to an embodiment, the first cover member 211 may be referred to as a main case or a cover member.

According to an embodiment, the (1-1)^{th} sidewall 211a, the (1-2)^{th} sidewall 211b, and the (1-3)^{th} sidewall 211c of the first cover member 211 may be formed to be opened at one side (e.g., a front surface) thereof to accommodate (or surround) at least part of the second housing 202. For example, at least part of the second housing 202 may be surrounded by the first housing 201 and slidein a direction parallel toa first surface (e.g., a first surface F1 of FIG. 4), for example, in the direction of the arrow ① under the guidance of the first housing 201. According to an embodiment, the (1-1)^{th} sidewall 211a, the (1-2)^{th} sidewall 211b, and/or the (1-3)^{th} sidewall 211c of the first cover member 211 may be integrally formed. According to an embodiment, the (1-1)^{th} sidewall 211a, the (1-2)^{th} sidewall 211b, and/or the (1-3)^{th} sidewall 211c of the first cover member 211 may be formed as separate structures and combined or assembled.

According to an embodiment, the first cover member 211 may be formed to surround at least part of the display 203. For example, at least part of the display 203 may be formed to be surrounded bythe (1-1)^{th} sidewall 211a, the (1-2)^{th} sidewall 211b, and/or the (1-3)^{th} sidewall 211c of the first cover member 211.

According to an embodiment, the second housing 202 may include a second cover member 221 (e.g., a slide plate). The second cover member 221 may have a plate shape (that is, the second cover member 221 may be substantially planar) and include the first surface (e.g., the first surface F1 of FIG. 4) supporting internal components. For example, the second cover member 221 may support at least part (e.g., a first display area A1) of the display 203. According to an embodiment, the second cover member 221 may be referred to as a front cover.

According to an embodiment, the second cover member 221 may include a (2-1)^{th}(or first) sidewall 221a, a (2-2)^{th}(or second) sidewall 221b extending from the (2-1)^{th} sidewall 221a, and a (2-3)^{th}(or third) sidewall 221c extending from the (2-1)^{th} sidewall 221a and substantially parallel to the (2-2)^{th} sidewall 221b. According to an embodiment, the (2-2)^{th} sidewall 221b and the (2-3)^{th} sidewall 221c may be formed substantially perpendicular to the (2-1)^{th} sidewall 221a. According to an embodiment, the second cover member 221 may be referred to as an auxiliary cover member.

According to an embodiment, as the second housing 202 moves in a first direction (e.g., the direction ①) parallel to the (2-2)^{th}sidewall 211b or the (2-3)^{th}sidewall 211c, the second housing 202 may form the slide-in state and the slide-out state of the electronic device 101. The second housing 202 may be located at a first distance from the (1-1)^{th} sidewall 211a of the first housing 201 in the slide-in state of the electronic device 101, whereas the second housing 202 may be moved to be located at a second distance greater than the first distance from the (1-1)^{th} sidewall 211a of the first housing 201 in the slide-out state of the electronic device 101. In an embodiment, the first housing 201 may be formed to surround part of the (2-1)^{th} sidewall 221a in the slide-in state of the electronic device 101. That is, the second housing 202 may be moved relative to the first housing 201 to change a state of the electronic device 101. For example, the second housing 202 may be moved relative to the first housing 201 to change a state of the electronic device 101 between a closed state and an open state.

According to an embodiment, the electronic device 101 may be placed in an intermediate state between the slide-in state of FIG. 2 (e.g., a fully open state) and the slide-out state of FIG. 3 (e.g., a fully closed state). The distance between the (1-1)^{th} sidewall 211a and the (2-1)^{th} sidewall 221a in the intermediate state of the electronic device 101 may be shorter than the distance between the (1-1)^{th} sidewall 211a and the (2-1)^{th} sidewall 221a in the fully open state of the electronic device 101 and greater than distance between the (1-1)^{th} sidewall 211a and the (2-1)^{th} sidewall 221a in the fully closed state of the electronic device 101. According to an embodiment, as at least part of the display 203 slides in the intermediate state of the electronic device 101, an area exposed to the outside may change. For example, the ratio of the width (length in an X direction) to the height (length in a Y direction) of the display 203 and/or the distance between the (1-1)^{th}sidewall 211a and the (2-1)^{th} sidewall 221a in the intermediate state of the electronic device 101 may be changed based on sliding movement of the electronic device 101.

According to an embodiment, the electronic device 101 may include the display 203, a key input device 245, a connector hole 243, audio modules 247a and 247b, or camera modules 249a and 249b. According to an embodiment, the electronic device 101 may further include an indicator (e.g., a light emitting diode(LED) device) or various sensor modules.

According to an embodiment, the display 203 may include the first display area A1 and the second display area A2 configured to be exposed to the outside of the electronic device 101 based on sliding movement of the second housing 202. According to an embodiment, the first display area A1 may be disposed on the second housing 202. For example, the first display area A1 may be disposed on the second cover member 221 of the second housing 202. According to an embodiment, the second display area A2 may extend from the first display area A1, and as the second housing 202 slides with respect to the first housing 201, the second display area A2 may be accommodated into the first housing 201 or visually exposed to the outside of the electronic device 101. According to an embodiment, as the electronic device 101 changes from the slide-out state to the slide-in state, the display 203 may extend in the downward direction (e.g., the -Y direction) of the electronic device 101. For example, in the slide-out state of the electronic device 101, the second display area A2 may be visually exposed at the bottom (e.g., - Y direction) of display 203. According to an embodiment, as the electronic device 101 changes from the slide-out state to the slide-in state, the display 203 may extend in the upward direction (e.g., the +Y direction) of the electronic device 101. For example, in the slide-out state of the electronic device 101, the second display area A2 may be visually exposed at the top (e.g., + Y direction) of the display 203. That is, as the second housing 202 is moved relative to the first housing 201, a portion of the display 203 which is exposed to the outside of the electronic device 101 and is thus visible to a user is changed. It should be understood that the display 203 may be formed as a single, flexible or rollable display, and that the first display area A1 and the second display area A2 are continuous in some examples.

According to an embodiment, the second display area A2 may move under the guidance of one area (e.g., a curved surface 213a of FIG. 4) of the first housing 201, and may be accommodated into an internal space of the first housing 201 or exposed to the outside of the electronic device 101. According to an embodiment, the second display area A2 may move based on sliding movement of the second housing 202 in the first direction (e.g., the arrowed direction ①). For example, while the second housing 202 slides, part of the second display area A2 may be deformed into a curved shape at a position corresponding to the curved surface 213a of the first housing 201. It should be understood that other arrangements for storing the at least part of the second display area A2 when the at least part of the second display area A2 is not exposed are possible, and that the present disclosure should not be limited to the example design shown in the illustrations of FIGS. 2 to 4.

According to an embodiment, when viewed from above the second cover member 221 (e.g., the front cover), if the electronic device 101 changes from the slide-in state to the slide-out state (e.g., if the second housing 202 slides to extend with respect to the first housing 201, for example if the electronic device 101 is changed from the state shown in FIG. 2 to the state shown in FIG. 3), the second display area A2 may form a substantially flat surface together with the first display area A1, while being gradually exposed to the outside of the first housing 201. According to an embodiment, the display 203 may be coupled with or disposed adjacent to a touch sensing circuit, a pressure sensor capable of measuring the intensity (pressure) of a touch, and/or a digitizer detecting a magnetic stylus pen. According to an embodiment, regardless of the slide-in state or slide-out state of the electronic device 101, an exposed part of the second display area A2 may be disposed on part (e.g., the curved surface 213a of FIG. 4) of the first housing, and part of the second display area A2 may maintain a curved shape at a position corresponding to the curved surface 213a.

According to an embodiment, the key input device 245 may be located in one area of the housing 210 (e.g., the first housing 201 and/or the second housing 202). Depending on appearance and a use condition, the electronic device 101 may be designed to be without the illustrated key input device 245 or to include additional key input device(s). According to an embodiment, the electronic device 101 may include a key input device not shown, for example, a home key button or a touch pad disposed around the home key button. According to an embodiment, at least part of the key input device 245 may be disposed on the (1-1)^{th} sidewall 211a, the (1-2)^{th} sidewall 211b, and/or the (1-3)^{th} sidewall 211c of the first housing 201. According to an embodiment, at least part of the key input device 245 may be disposed on the (1-2)^{th} sidewall 221a, the (2-2)^{th} sidewall 221b, and/or the (2-3)^{th} sidewall 221c of the second housing 202.

According to an embodiment, the connector hole 243 may be omitted according to an embodiment and accommodate a connector (e.g., a USB connector) to transmit and receive power and/or data to and from an external electronic device. According to an embodiment (not shown), the electronic device 101 may include a plurality of connector holes 243, and some of the plurality of connector holes 243 may function as a connector hole fortransmitting and receivingan audio signal to and from an external electronic device. Although the connector hole 243 is located in the second housing 202 in the illustrated embodiment, the connector hole 243 is not limited thereto, and the connector hole 243 or a connector hole not shown may be located in the first housing 201.

According to an embodiment, the audio modules 247a and 247b may include at least one speaker hole 247a or at least one microphone hole 247b. One of the speaker holes 247a may be provided as a receiver hole for voice calls, and another may be provided as an external speaker hole. The electronic device 101 may include a microphone forobtaining sound, and the microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole, or may include a speaker (e.g., a piezo speaker) without the speaker hole 247a. According to an embodiment, the speaker hole 247a and the microphone hole 247b may be located in the first housing 201 and/or the second housing 202.

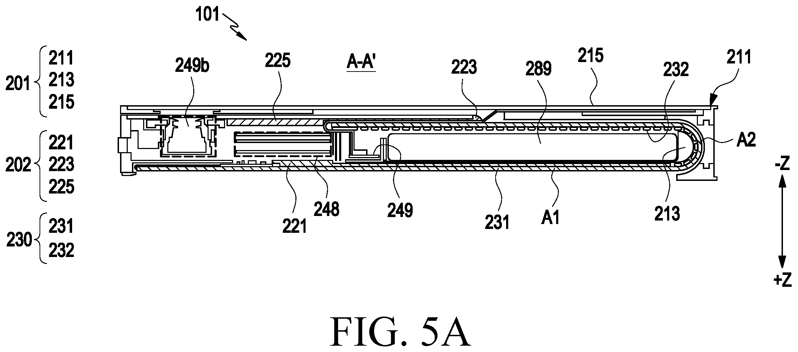

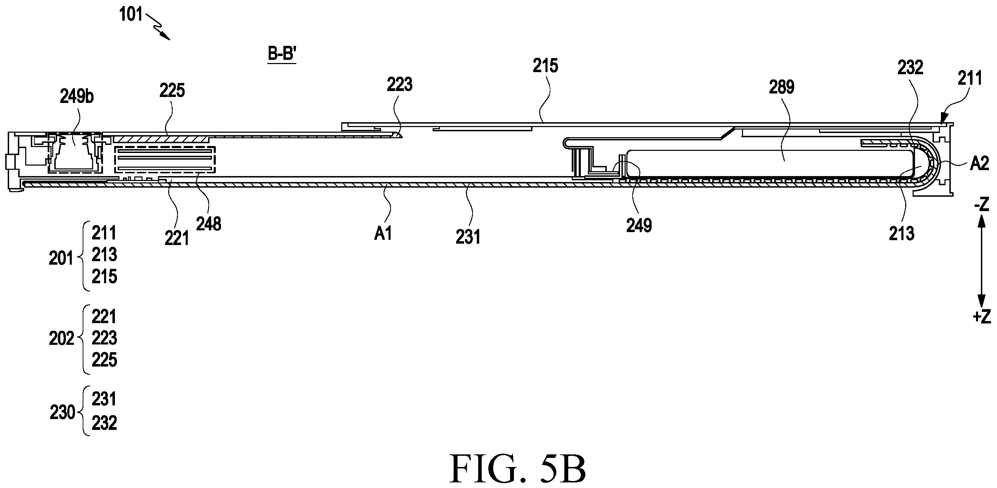

According to an embodiment, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera, and according to an embodiment, the electronic device 101 may measure a distance to a subject by including an IR projector and/or an IR receiver. The camera modules 249a and 249b may include one or more lenses, an image sensor, and/or an image signal processor. The first camera module 249a may be disposed to face in the same direction as the display 203. For example, the first camera module 249a may be disposed around the first display area A1 or in an area overlapping with the display 203. When the first camera module 249a is disposed in an area overlapping with the display 203, the first camera module 249a may capture a subject through the display 203. According to an embodiment, the first camera module 249a may not be visually exposed to a screen display area (e.g., the first display area A1) and include a hidden under display camera (UDC). According to an embodiment, the second camera module 249b may capture a subject in a direction opposite to the first display area A1. According to an embodiment, the first camera module 249a and/or the second camera module 249b may be disposed on the second housing 202. According to an embodiment, a plurality of second camera modules 249b may be formed to provide various arrays. For example, the plurality of second camera modules 249b may be arranged along a width direction (an X-axis direction) substantially perpendicular to a sliding direction (e.g., a Y-axis direction) of the electronic device 101. In another example, the plurality of second camera modules 249b may be arranged along the sliding direction of the electronic device 101 (e.g., the Y-axis direction). In another example, the plurality of second camera modules 249b may be arranged in N*M rows and columns like a matrix.

According to an embodiment, the second camera module 249b may not be visually exposed to the outside of the electronic device 101 in the slide-in state of the electronic device 101, and may capture the outside of the electronic device 101 in the slide-out state of the electronic device 101. That is, in some examples, the second camera module 249b is visible to the outside of the electronic device 101 only when the second housing 202 is extended with respect to the first housing 201. According to another example, the second camera module 249b may capture the outside of the electronic device 101 in the slide-in state and slide-out state of the electronic device 101. For example, at least part (e.g., a first rear plate 215 and/or a second rear plate 225 of FIG. 4) of the housing 210 may be substantially transparent, and the second camera module 249b may capture the outside of the electronic device 101 through the first rear plate 215 and/or the second rear plate 225.

According to an embodiment, an indicator (not shown) of the electronic device 101 may be disposed in the first housing 201 or the second housing 202 and include an LEDto provide state information about the electronic device 101 as a visual signal. A sensor module (not shown) of the electronic device 101 may generate an electric signal or data value corresponding to an internal operating state of the electronic device 101 or an external environmental state. The sensor module may include, for example, a proximity sensor, a fingerprint sensor, or a biometric sensor (e.g., an iris/face recognition sensor or a heart rate monitor(HRM) sensor). In another embodiment, the sensor module may further include, for example, at least one of a gesture sensor, a gyro sensor, a barometric pressure sensor, a magnetic sensor, an acceleration sensor, a grip sensor, a color sensor, an IR sensor, a temperature sensor, a humidity sensor, or an illuminance sensor. According to an embodiment, the sensor module may be disposed in the first housing 201 and/or the second housing 202. For example, at least part of the sensor module may be located in the first housing 201, and other part thereof may be located in the second housing 202.

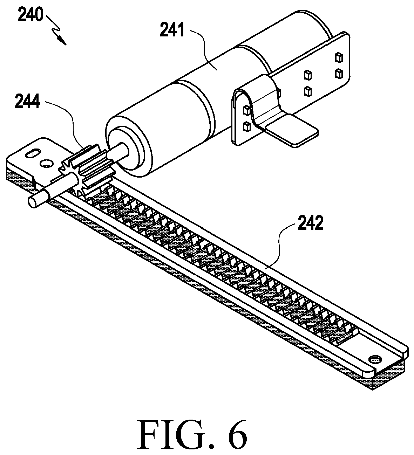

FIG. 4 is an exploded perspective view illustrating an electronic device (for example, the electronic device 101 of FIGS. 2 or 3) according to an embodiment of the disclosure. FIG. 5A is a sectional view taken along a line A-A' of FIG. 2 according to an embodiment of the disclosure. FIG. 5B is a sectional view taken along a line B-B' of FIG. 3 according to an embodiment of the disclosure. FIG. 6 is a perspective view illustrating a driving structure according to an embodiment of the disclosure. It should be understood that the driving structure of FIG. 6 may be included in the electronic device 101 of FIGS. 1-5.

Referring to FIG. 4, FIG. 5A, FIG. 5B, and/or FIG. 6, the electronic device 101 may include the first housing 201, the second housing 202, a display assembly 230, and a driving structure 240. The configurations of the first housing 201, the second housing 202, and the display assembly 230 of FIG. 4, FIG. 5A, and/or FIG. 5B may be wholly or partially identical to those of the first housing 201, the second housing 202, and the display 203 of FIG. 2 and/or FIG. 3. The embodiment of FIG. 2 and/or FIG. 3 may be partially or fully combined with the embodiment of FIG. 4, FIG. 5A, FIG. 5B, and/or FIG. 6. According to an embodiment, the first housing 201 may include the first cover member 211 (e.g., the first cover member 211 of FIGS. 2 and 3), a frame 213, and the first rear plate 215.

According to an embodiment, the first cover member 211 may accommodate at least part of the frame 213 and a component (e.g., a battery 289) locatedon the frame 213. According to an embodiment, the first cover member 211 may be formed to surround at least part of the second housing 202. According to an embodiment, the first cover member 211 may protect a component (e.g., the second circuit board 249 and the frame 213) located in the first housing 201 from external impact. According to an embodiment, the second circuit board 249 accommodating an electronic component may be connected to the first cover member 211.

According to an embodiment, the frame 213 may be connected to the first cover member 211. For example, the frame 213 may be connected to the first cover member 211, and the second housing 202 may be movable relative to the first cover member 211 and/or the frame 213. According to an embodiment, the frame 213 may accommodate the battery 289. For example, the frame 213 may include a groove for accommodating the battery 289 therein. The frame 213 may be connected to the battery cover 289a and surround at least part of the battery 289 together with a battery cover 289a. According to an embodiment, the frame 213 may include thecurved surface 213a facing the display assembly 230.

According to an embodiment, the first rear plate 215 may substantially form at least part of the exterior of the first housing 201 or the electronic device 101. For example, the first rear plate 215 may be coupled withan outer surface of the first cover member 211. According to an embodiment, the first rear plate 215 may provide a decorative effect on the exterior of the electronic device 101. The first rear plate 215 may be made of at least one of a metal, glass, a synthetic resin, or ceramic.

According to an embodiment, the second housing 202 may include a second cover member 221 (e.g., the second cover member 221 of FIGS. 2 and 3), a rear cover 223, and the second rear plate 225.

According to an embodiment, the second cover member 221 may be connected to the first housing 201 through a guide rail 250 andmay be configured to reciprocate in a straight line in one direction (e.g., the arrowed direction① in FIG. 3)under the guidance of the guide rail 250. That is, the second cover member 221 may be configured to be moveable forwards or backwards along the straight line based on the arrangement of the guide rail 250.

According to an embodiment, the second cover member 221 may support at least part of the display 203. For example, the second cover member 221 may include the first surface F1, and the first display area A1 of the display 203 may be substantially located on the first surface F1 and maintained in a flat shape. According to an embodiment, the second cover member 221 may be formed of a metal material and/or a non-metal (e.g., polymer) material. According to an embodiment, the first circuit board 248 accommodating an electronic component (e.g., the processor 120 and/or the memory 130 of FIG. 1) may be connected to the second cover member 221. According to an embodiment, the second cover member 221 may protect a component (e.g., the first circuit board 248 and the rear cover 223) located in the second housing 202 from external impact.

According to an embodiment, the rear cover 223 may protect a component (e.g., the first circuit board 248) located on the second cover member 221. For example, the rear cover 223 may be formed to be connected to the second cover member 221 and surround at least part of the first circuit board 248. According to an embodiment, the rear cover 223 may include an antenna pattern to communicate with an external electronic device. For example, the rear cover 223 may include a laser direct structuring (LDS) antenna.

According to an embodiment, the second rear plate 225 may substantially form at least part of the exterior of the second housing 202 or the electronic device 101. For example, the second rear plate 225 may be coupled with an outer surface of the second cover member 221. According to an embodiment, the second rear plate 225 may provide a decorative effect on the exterior of the electronic device 101. The second rear plate 225 may be made of at least one of a metal, glass, a synthetic resin, or ceramic.

According to an embodiment, the display assembly 230 may include a display 231 (e.g., the display 203 of FIG. 2 and/or FIG. 3) and a multi-bar structure 232 supporting the display 203. According to an embodiment, the display 231 may be referred to as a flexible display, a foldable display, and/or a rollable display. According to an embodiment, the first display area A1 of the display 231 may be supported by a rigid body, and the second display area A2 may be supported by a bendable structure. For example, the first display area A1 may be supported by the first surface F1 of the second cover member 221 or a plate not shown. The second display area A2 may be supported by the multi-bar structure 232.

According to an embodiment, the multi-bar structure 232 may be connected to or attached to at least part (e.g., the second display area A2) of the display 231. According to an embodiment, as the second housing 202 slides, the multi-bar structure 232 may move with respect to the first housing 201. In the slide-in state of the electronic device 101 (e.g., FIG. 2), the multi-bar structure 232 may be mostly accommodated inside the first housing 201 and located between the first cover member 211 and the second cover member 221. According to an embodiment, at least part of the multi-bar structure 232 may move in correspondence with the curved surface 213a located at an edge of the frame 213. According to an embodiment, the multi-bar structure 232 may be referred to as a display support member or a support structure, and may be in the form of an elastic plate.

FIG. 6 illustrates a driving structure 240 according to an embodiment of the disclosure. The driving structure 240 of FIG. 6 may be included in the electronic device 101 of FIGS. 1-5. According to an embodiment, the driving structure 240 may move the second housing 202 relative to the first housing 201. For example, the driving structure 240 may include a motor 241 configured to generate a driving force for sliding movement of the second housing 202 with respect to the first housing 201. The driving structure 240 may include a gear 244 (e.g., a pinion) connected to the motor 241 and a rack 242 configured to mesh with the gear 244.

According to an embodiment, a housing where the rack 242 is located and a housing where the motor 241 is located may be different. According to an embodiment, the motor 241 may be connected to the second housing 202, and the rack 242 may be connected to the first housing 201. According to an embodiment, the motor 241 may be connected to the first housing 201, and the rack 242 may be connected to the second housing 202.

According to an embodiment, the motor 241 may be controlled by a processor (e.g., the processor 120 of FIG. 1). For example, the processor 120 may include a motor driver driving circuit and transmit a pulse width modulation (PWM) signal for controllinga speed and/or torque of the motor 241 to the motor241. According to an embodiment, the motor 241 may be electrically connected to the processor (e.g., the processor 120 of FIG. 1) located on a circuit board (e.g., a first circuit board 248 of FIG. 4) using a flexible printed circuit board.

According to an embodiment, the second housing 202 may accommodate the first circuit board 248 (e.g., a main board). According to an embodiment, a processor, memory, and/or an interface may be mounted on the first circuit board 248. The processor may include, for example, at least one of a CPU, an AP, a GPU, an image signal processor, a sensor hub processor, or a CP. According to various embodiments, the first circuit board 248 may include a flexible printed circuit board type radio frequency cable (FRC). The first circuit board 248 may be disposed on at least part of the second cover member 221 and electrically connected to an antenna module and a communication module.

According to an embodiment, the memory may include, for example, volatile memory or non-volatile memory.

According to an embodiment, the interface may include, for example, an HDMI, a USB interface, an SD card interface, and/or an audio interface. The interface may electrically or physically connect the electronic device 101 to an external electronic device and include a USB connector, an SD card/multimedia card (MMC) connector, or an audio connector.

According to an embodiment, the electronic device 101 may include the second circuit board 249 (e.g., a sub-circuit board) spaced apart from the first circuit board 248 (e.g., the main circuit board) inside the first housing 201. The second circuit board 249 may be electrically connected to the first circuit board 248 through a connection flexible board. The second circuit board 249 may be electrically connected to electric components disposed in an end area of the electronic device 101, such as the battery 289 or a speaker and/or a SIM socket, to transmita signal and power. According to an embodiment, the second circuit board 249 may accommodate or be connected to a wireless charging antenna (e.g., a coil). For example, the battery 289 may receive power from an external electronic device using the wireless charging antenna. In another example, the battery 289 may transmit power to an external electronic device using the wireless charging antenna.

According to an embodiment, the battery 289, which is a device supplying power to at least one component of the electronic device 101, may include a non-rechargeable primary battery, a rechargeable secondary battery, or a fuel cell. The battery 289 may be disposed integrally inside the electronic device 101 or detachably from the electronic device 101. According to an embodiment, the battery 289 may be formed as one integrated battery or include a plurality of separate batteries. According to an embodiment, the battery 289 may be located on the frame 213. For example, the battery 289 may be surrounded by the frame 213 and the battery cover 289a. According to another embodiment, the battery 289 may be located inside the second housing 202 and slide along with the second housing 202.

According to an embodiment, the guide rail 250 may guide movement of the multi-bar structure 232. For example, the multi-bar structure 232 may slide along a slit 251 formed on the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed on an inner surface of the guide rail 250.

According to an embodiment, the guide rail 250 may provide a force to the multi-bar structure 232 based on driving of the motor 241.

According to an embodiment, when the electronic device 101 changes from the slide-in state to the slide-out state, an inner portion 252 of the guide rail 250 may provide a force to the multi-bar structure 232. The multi-bar structure 232 receiving the force may move along the slit 251 of the guide rail 250, and the second housing 202 may slide to extend with respect to the first housing 201. At least part of the display assembly 230 accommodated between the first cover member 211 and the frame 213 may extend to the front surface.

According to an embodiment, when the electronic device 101 changes from the slide-out state to the slide-in state, an outer portion 253 of the guide rail 250 may provide a force to the bent multi-bar structure 232. The multi-bar structure 232 receiving the force may move along the slit 251 of the guide rail 250, and at least part of the second housing 202 may slide to be accommodated into the first housing 201. At least part of the display assembly 230 may be accommodated between the first cover member 211 and the frame 213.

Referring to FIG. 5A, at least part of the second housing 202 may be disposed to be accommodated in the first housing 201 in the slide-in state of the electronic device 101. As the second housing 202 is disposed to be accommodated in the first housing 201, the overall volume of the electronic device 101 may be reduced. According to an embodiment, when the second housing 202 is accommodated in the first housing 201, the size of the display 231 that is visually exposed may be minimized. For example, when the second housing 202 is fully accommodated in the first housing 201, the first display area A1 of the display 231 may be visually exposed, and at least part (e.g., part facing a -Z axis) of the second display area A2 may be disposed between the battery 289 and the first rear plate 215.

Referring to FIG. 5B, at least part of the second housing 202 may protrude from the first housing 201 in the slide-out state of the electronic device 101. As the second housing 202 protrudes from the first housing 201, the overall volume of the electronic device 101 may increase. According to an embodiment, when the second housing 202 protrudes from the first housing 201, at least part of the second display area A2 of the display 231 together with the first display area A1 may be visually exposed to the outside of the electronic device 101.

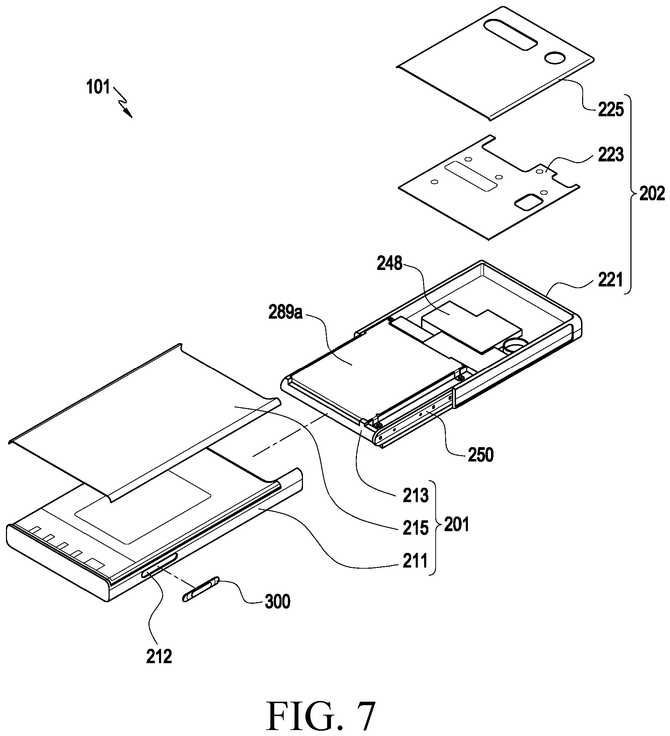

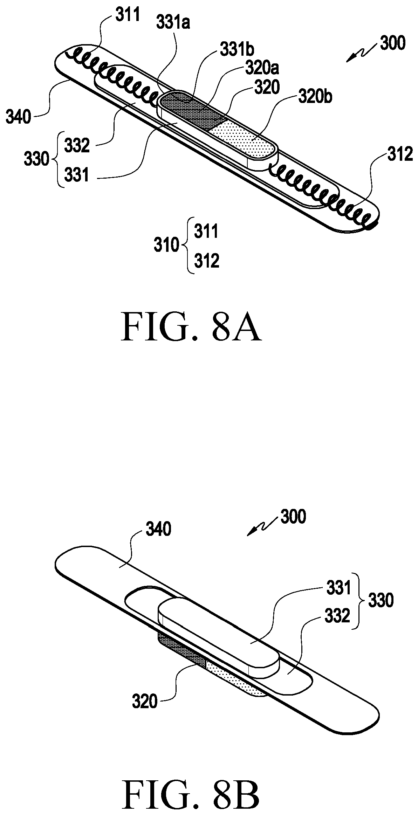

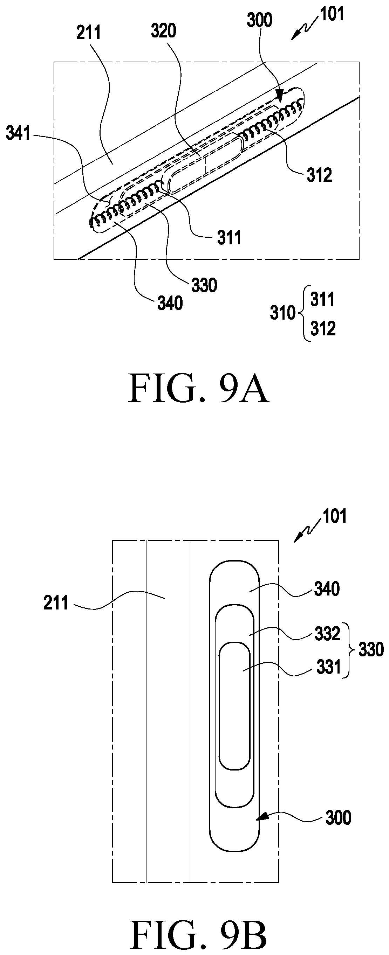

FIG. 7 is an exploded perspective view illustrating an electronic device including a key input device according to an embodiment of the disclosure. FIG. 8A is a front perspective view illustrating the key input device according to an embodiment of the disclosure. FIG. 8B is a rear perspective view illustrating the key input device according to an embodiment of the disclosure. FIG. 9A is a projection view illustrating the key input device connected to a book cover according to an embodiment of the disclosure. FIG. 9B is a perspective view of the key input device disposed inside the book cover according to an embodiment of the disclosure. It should be understood that the electronic device 101 of FIGS. 7 to 9 may be the same or similar as the electronic device 101 of FIGS. 1 to 6, and thus the description of FIGS. 7 to 9 should be taken in combination with the description of FIGS. 1 to 6 set out above.

Referring to FIG. 7, FIG. 8A, FIG. 8B, FIG. 9A, and/or FIG. 9B, the electronic device 101 may includethe first housing 201 (e.g., the first cover member 211, theframe 213, the first rear plate 215, and the battery cover 289a), the second housing 202 (e.g., the second cover member 221, the rear cover 223, and the second rear plate 225), the guide rail 250, and a key input device 300. The configurations of the first housing 201, the second housing 202, and the key input device 300 of FIG. 7, FIG. 8A, FIG. 8B, FIG. 9A, and/or FIG. 9Bmay be wholly or partially identical to those of the first housing 201, the second housing 202, the guide rail 250, and the key input device 245 of FIG. 2 or 3.

According to an embodiment, the key input device 300 may obtain a user input. For example, at least part of the key input device 300 may be exposed to the outside of the housings 201 and 202. At least part of the key input device 300 (e.g., an elastic body 310, a magnetic body 320, and anoperator 330) may move based on a force received from the user's body (e.g., a finger).

According to an embodiment, the key input device 300 may be connected to the first cover member 211. For example, the first cover member 211 may include an accommodation groove 212 for accommodating at least part of the key input device 300 therein. The magnetic body 320 of the key input device 300 may be connected to a surface of the first cover member 211 providing the accommodation groove 212. The accommodation groove 212 may be referred to as a groove or recess formed on an outer surface of the first cover member 211.

According to an embodiment, the key input device 300 may include the elastic body 310 to restorethe position of the key input device 300. For example, after the position of the key input device 300 is changed by a force applied to part (e.g., the operator 330) of the key input device 300 by the user, the position of the key input device 300 may be restored based on a force (e.g., elastic force) transmitted by the elastic body 310. According to an embodiment, the key input device 300 may be connected to an inner surface of the accommodation groove 212 using the elastic body 310. According to an embodiment, the elastic body 310 may be referred to as a spring (e.g., a coil spring and/or a plate spring).

According to an embodiment, the elastic body 310 may include a plurality of elastic bodies 311 and 312. For example, the elastic body 310 may include a first elastic body 311 facing a first end320a of the magnetic body 320 and a second elastic body 312 facing a second end320b of the magnetic body 320. According to an embodiment, the magnetic body 320 may be located between the first elastic body 311 and the second elastic body 312. In some examples, the elastic body 310 may include one or more springs, but the present disclosure is not limited thereto.

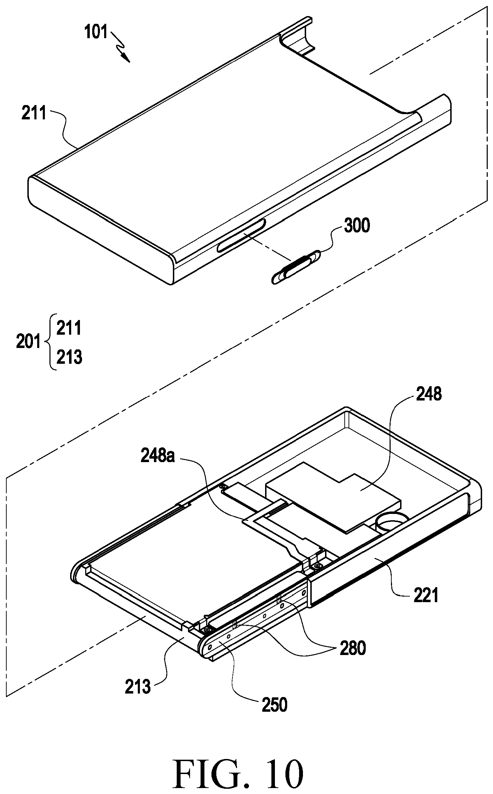

According to an embodiment, the key input device 300 may include the magnetic body 320. The magnetic body 320 may be used to detect a user input applied to the key input device 300. For example, the processor (e.g., the processor 120 of FIG. 1) may determine a user input (e.g., a force) applied to the key input device 300 by detecting a change in a magnetic field transmitted from the magnetic body 320 using a sensor (e.g., a sensor 280 of FIG. 10B). The structure of the magnetic body 320 may be selectively designed. For example, although the magnetic body 320 is shown as two magnetic bodies in FIGS. 8A and 8B, the structure of the magnetic body 320 is not intended to be limited thereto. The magnetic body 320 may include one magnetic body. According to an embodiment, the magnetic body 320 may extend along alongitudinal direction (e.g., the +Y-axis direction) of the electronic device 101.

According to an embodiment, the key input device 300 may come into contact with the user's body (e.g., a finger). For example, the key input device 300 may include the operator 330 at least partially exposed to the outside of the electronic device (e.g., the electronic device 101 of FIG. 3). According to an embodiment, the operator 330 may accommodate at least part of the magnetic body 320. The magnetic body 320 may move together with the operator 330 based on a user input.

According to an embodiment, the operator 330 may include an accommodation area 331 surrounding at least part of the magnetic body 320 and a protection area 332 extending from the accommodation area 331. The protection area 332 may prevent the elastic body 310 from being visible. The protection area 332 may protect the elastic body 310 from external impact. According to an embodiment, the operator 330 may be connected to the elastic body 310. For example, the accommodation area 331 of the operator 330 may include an outer surface 331a connected to the elastic body 310 and an inner surface 331b facing the magnetic body 320.

According to an embodiment, a cover unit 340 may protect at least part of the key input device 300. For example, the cover unit 340 may cover at least part (e.g., the protection area 332) of the operator 330. According to an embodiment, the cover unit 340 may surround at least part of the operator 330. For example, the cover unit 340 may surround the accommodation area 331 of the operator 330. According to an embodiment, the cover unit 340 may be connected to or coupled with the first cover member 211 using an adhesive or bonding. The elastic body 310, the magnetic body 320, and the operator 330 may move relative to the cover unit 340 and/or the first cover member 211.

According to an embodiment, the cover unit 340 may be covered at least part of the operator 330 and the elastic body 310.

According to an embodiment, the cover unit 340 may guide movement of the operator 330. For example, the cover unit 340 may include a guide hole 341 for accommodating at least part of the operator 330 therein. The accommodation area 331 of the operator 330 may slide while being located inside the guide hole 341. According to an embodiment, the key input device 300 may include thecover unit 340. According to an embodiment, the cover unit 340 may be referred to as a guide unit.

The structure described with reference to FIG. 7, FIG. 8A, FIG. 8B, FIG. 9A, and/or FIG. 9B may be used together with theafore-described structure (e.g., the electronic device 101 of FIGS. 1 to 6 and/or the key input device 245 of FIGS. 2 and 3).

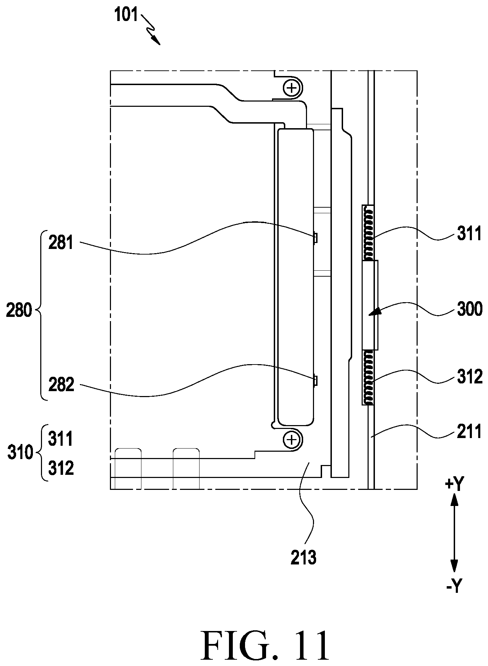

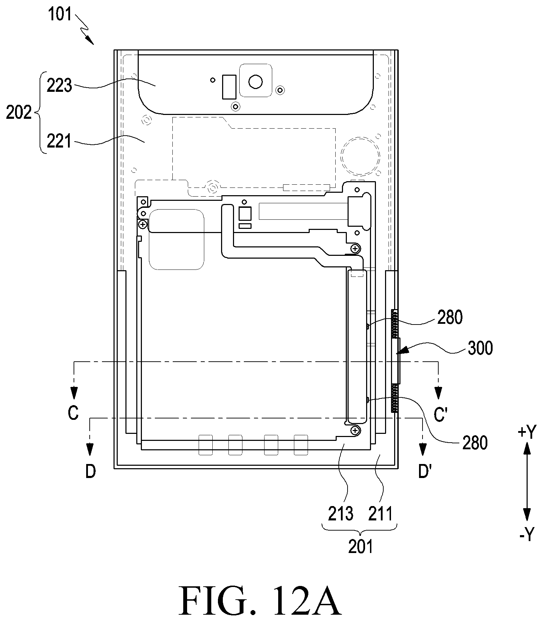

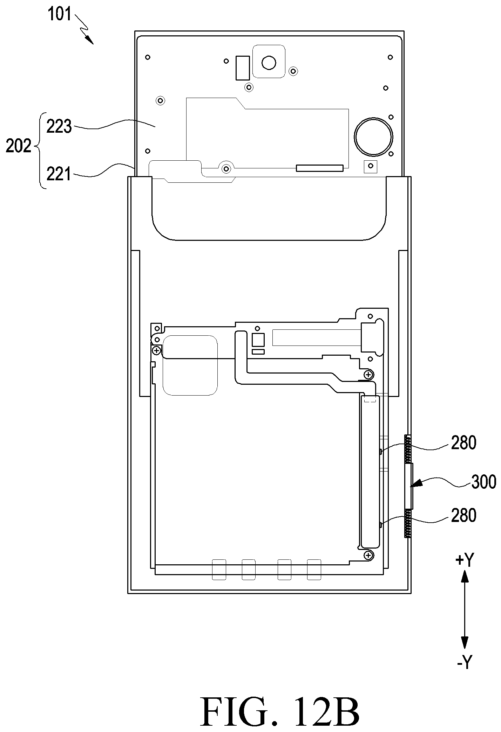

FIG. 10 is an exploded perspective view illustrating an electronic device including a key input device and a sensor according to an embodiment of the disclosure. FIG. 11 is a top view illustrating the electronic device including the sensor and the key input device according to an embodiment of the disclosure. FIG. 12A is a rear view illustrating an electronic device including a magnet sensor and a key input device in the slide-in state according to an embodiment of the disclosure. FIG. 12B is a rear view illustrating electronic device including the magnet sensor and the key input device in the slide-out state according to an embodiment of the disclosure. It should be understood that the electronic device 101 of FIGS. 10 to 12 may be the same or similar as the electronic device 101 of FIGS. 1 to 6 or 7 to 9, and thus the description of FIGS. 10 to 12 should be taken in combination with the description of FIGS. 1 to 6 and 7 to 9 set out above.

Referring to FIGS. 10, 11, 12A, and 12B, the electronic device 101 may include the first housing 201 (e.g., the first cover member 211 and the frame 213), the second housing 202 (e.g., the second cover member 221 and the second frame 225), the first circuit board 248, the sensor 280, and the key input device 300.

The configurations of the first housing 201, the second housing 202, the first circuit board 248, and the key input device 300 of FIG. 10, FIG. 11, FIG. 12A, and/or FIG. 12B may be wholly or partially identical to those of the first housing 201, the second housing 202, the first circuit board 248, and the key input device 300 of FIG. 7.

According to an embodiment, the sensor 280 may detect a magnetic field generated from the magnetic body 320 of the key input device 300. For example, when the position of the key input device 300 is changed, the sensor 280 may detect a change in the magnetic field based on the position of the magnetic body 320 of the key input device 300. According to an embodiment, the sensor 280 may be a Hall sensor that detects a magnetic field using a Hall effect.

According to an embodiment, the sensor 280 may be disposed within the first housing 201. For example, the sensor 280 may be disposed on the frame 213 of the first housing 201. According to an embodiment, the sensor 280 may be coupled with or attached to an inner surface 213c of the frame 213.

According to an embodiment, the processor (e.g., the processor 120 of FIG. 1) may determine a user input transmitted to the key input device 300 based on the magnetic field detected by the sensor 280. For example, when the user moves the key input device 300, the processor 120 may use the sensor 280 to determine a position change of the key input device 300. According to an embodiment, the processor 120 may be located inside the second housing 202. For example, the processor 120 may be located on the first circuit board 248 located inside the second cover member 221.

The processor 120 may perform a function corresponding to the position change of the key input device 300. For example, the processor 120 may slide the electronic device 101 and/or execute a specified application in response to the position change of the key input device 300.

According to an embodiment, the sensor 280 may be electrically connected to the processor 120. An electric signal generated by the sensor 280 may be transmitted to the processor 120. The sensor 280 may be electrically connected to a flexible circuit board 248a.

According to an embodiment, the flexible circuit board 248a may electrically connect the sensor 280 to the first circuit board 248 on which the processor 120 is located in the slidable electronic device 101. For example, one end of the flexible circuit board 248a may be connected to the first circuit board 248, and the other end thereof may be connected to the sensor 280. According to an embodiment, at least part of the flexible circuit board 248a may be folded based on sliding movement of the electronic device 101.

According to an embodiment, a structure where the sensor 280 is located may be different from a structure where the key input device 300 is located. For example, the sensor 280 may be connected to the frame 213, and the key input device 300 may be connected to the first cover member 211. According to an embodiment, the key input device 300 may be spaced apart from the sensor 280. However, it should be understood that the present disclosure is not limited thereto.

The structure of the electronic device 101 described with reference to FIGS. 10, 11, 12A, and 12Bmay be used together with the afore-described structure of the electronic device 101 (e.g., FIG. 7, FIG. 8A, FIG. 8B, FIG. 9A, and/or FIG. 9B).

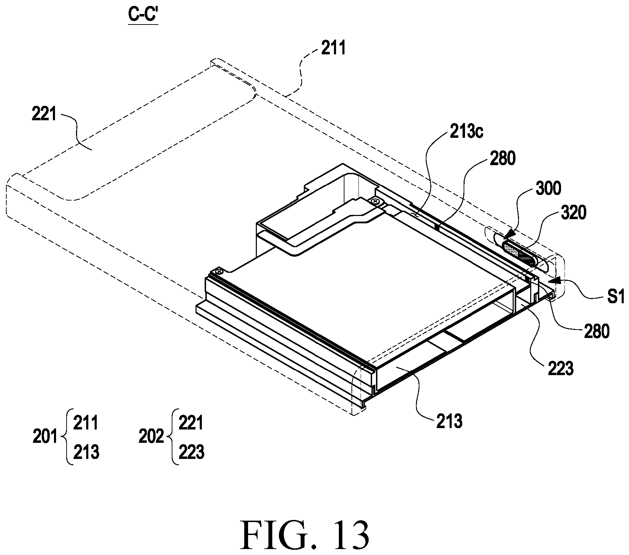

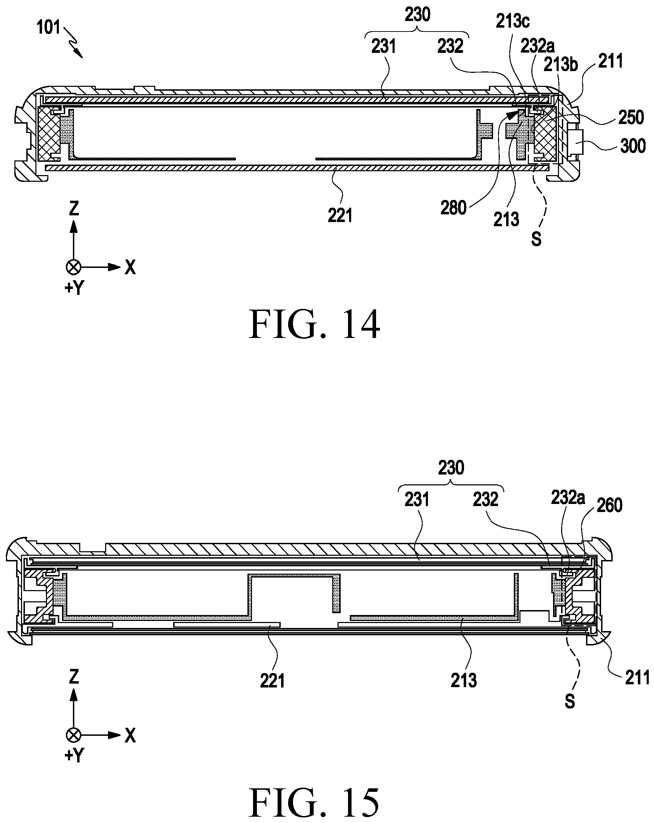

FIG. 13 is a sectional view illustrating an electronic device according to an embodiment of the disclosure. FIG. 14 is a sectional view taken along a line C-C' according to an embodiment of the disclosure. FIG. 15 is a sectional view taken along a line D-D' according to an embodiment of the disclosure.

Referring to FIG. 13, FIG. 14, and/or FIG. 15, the electronic device 101 may include the first housing 201, the second housing 202, the display assembly 230, the guide rail 250, a linear motion guide structure 260,the sensor 280, and the key input device 300.

The configurations of the first housing 201, the second housing 202, the display assembly 230, the guide rail 250, the sensor 280, and the key input device 300 of FIG. 13, FIG. 14, and/or FIG. 15 may be wholly or partially identical to those of the first housing 201, the second housing 202, the display assembly 230, the guide rail 250, the sensor 280, and the key input device 300 of FIG. 4 and/or FIG. 7. Thus, the description of FIGS. 13 to 15 should be taken in combination with the description of FIGS. 1 to 6 and 7 to 9 set out above.

According to an embodiment, the sensor 280 and the key input device 300 may be spaced apart from each other. At least some of the components of the electronic device 101 may be located between the sensor 280 and the key input device 300. For example, at least some of components performing a slide-in operation and/or a slide-out operation of the electronic device 101 may be located inside a space S1 between the sensor 280 and the key input device 300. The space S1 between the sensor 280 and the key input device 300 may be referred to as an internal space of the electronic device 101, for accommodating components of the electronic device 101 therein.

According to an embodiment, the sensor 280 may be connected to a structure (e.g., the frame 213) different from a structure (e.g., the first cover member 211) to which the key input device 300 is attached, so that the electronic device 101 may vary in design. For example, the sensor 280 may detect a change in the magnetic field or magnetic force generated by the key input device 300. The processor 120 may be electrically connected to the sensor 280 through a wiring or a flexible printed circuit board, and may not be connected to the key input device 300 through a wiring or a flexible printed circuit board. A component (e.g., a wiring or a flexible printed circuit board) for connection between the processor 120 and the key input device 300 may be excluded from the electronic device 101 to increase the internal space of the electronic device 101 or provide a space in which the components for the slide operation of the device 101 are to be located.

According to an embodiment, at least part of the guide rail 250 may be located between the key input device 300 and the sensor 280. For example, at least part of the guide rail 250 may be located between the key input device 300 and the sensor 280. According to an embodiment, the sensor 280 may be disposed on the inner surface 213a of the frame 213, and the guide rail 250 may be disposed on an outer surface 213b of the frame 213.

According to an embodiment, the display assembly 230 may include the display 231 (e.g., the display 203 of FIG. 3) and the multi-bar structure 232 supporting at least part (e.g., the second display area A2 of FIG. 3) of the display 231. According to an embodiment, at least part of the multi-bar structure 232 may be located between the key input device 300 and the sensor 280. For example, the multi-bar structure 232 may include a multi-bar end 232a to be inserted into a slit (e.g., the slit 251 of FIG. 4) of the guide rail 250. The multi-bar end 232a may be located in a space S between the key input device 300 and the sensor 280. According to an embodiment, the multi-bar end 232a may be located between the guide rail 250 and the outer surface 213b of the frame 213.

According to an embodiment, at least part of the linear motion guide structure 260 may be located between the key input device 300 and the sensor 280. For example, at least part of the linear motion guide structure 260 may be located in the space S between the sensor 280 and the key input device 300. According to an embodiment, the space S between the sensor 280 and the key input device 300 may be referred to a space between the sensor 280 and the key input device 300, extending along the longitudinal direction (Y-axis direction) of the electronic device 101. According to an embodiment, the linear motion guide structure 260 may guide relative movement of the second housing 202 with respect to the first housing 201. For example, the linear motion guide structure 260 may provide a path in which the second cover member 221 moves with respect to the first cover member 221. According to an embodiment, the linear motion guide structure 260 may be referred to as a linear motion(LM) guide.

The structure of the electronic device 101 described with reference to FIG. 13, FIG. 14, and/or FIG. 15 may be used together with the afore-described structure of the electronic device 101 (e.g., FIGS. 1 to 12B).

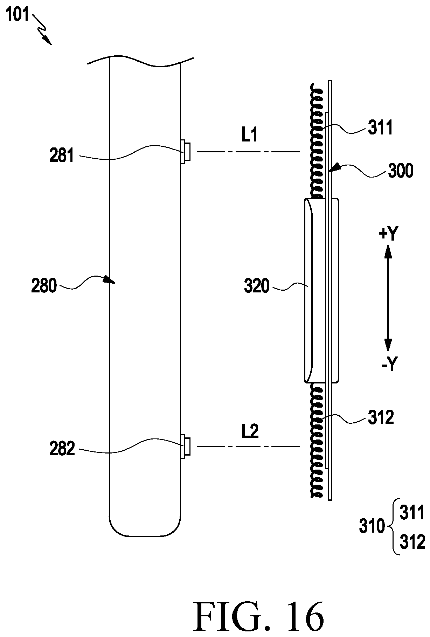

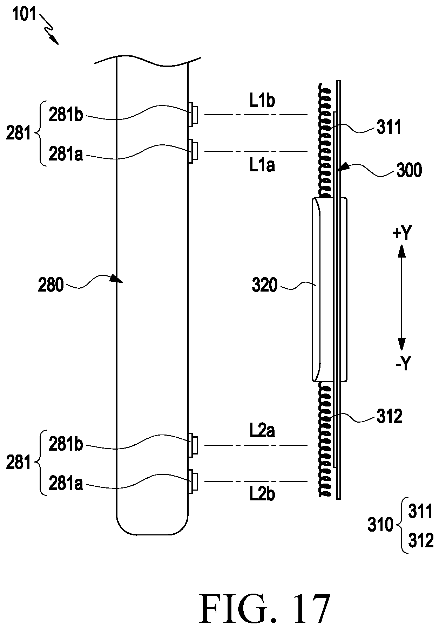

FIGS. 16 and 17 are diagrams illustrating recognition of a magnetic body by a sensor according to an embodiment of the disclosure.

Referring to FIGS. 16 and 17, the electronic device 101 may include the sensor 280 and the key input device 300. The configurations of the sensor 280 and the key input device 300 of FIGS. 16 and 17 may be wholly or partially identical to those of the sensor 280 and the key input device 300 of FIG. 11. Thus, it should be understood that the description of FIGS. 16 to 17 should be taken in combination with the description of FIGS. 1 to 15 set out above.

According to an embodiment, the sensor 280 may detect a position change of the key input device 300. For example, the sensor 280 may include a first magnetic field detection sensor 281 and a second magnetic field detection sensor 282 spaced apart from the first magnetic field detection sensor 281. According to an embodiment, the first magnetic field detection sensor 281 may be located in an upper part of the electronic device 101 (the +Y direction), compared to the second magnetic field detection sensor 282. When the key input device 300 moves in a first direction (the +Y direction), the first magnetic field detection sensor 281 may detect a magnetic field of the key input device 300. When the key input device 300 moves in a second direction (the -Y direction), the second magnetic field detection sensor 282 may detect the magnetic field of the key input device 300.

The processor 120 may determine the position of the key input device 300 based on the magnetic field detection sensors 281 and 282.

According to an embodiment, the processor 120 may determine the position of the key input device 300 according to which one of the magnetic field sensors 281 and 282 detects a magnetic field or not. For example, when a change in the magnetic field is detected by the first magnetic field detection sensor 281, the processor 120 may determine that the key input device 300 is located at a first position L1. When a change in the magnetic field is detected by the second magnetic field detection sensor 282, the processor 120 may determine that the key input device 300 is located at a second position L2.

According to an embodiment, when the intensity of the magnetic field detected by the first magnetic field sensor 281 is within a specified range, the processor 120 may determine that the key input device 300 is located at the first position L1. When the intensity of the magnetic field detected by the second magnetic field sensor 282 is within a specified range, the processor 120 may determine that the key input device 300 is located at the second position L2. The processor 120 may determine the position of the key input device 300 in consideration of an intensity of a magnetic field stored in the memory 130.

According to an embodiment, the processor 120 may determine the position of the key input device 300 by comparing the intensity of the magnetic field detected by the first magnetic field sensor 281 with the intensity of the magnetic field detected by the second magnetic field sensor 282. For example, as the magnetic body 320 of the key input device 300 and the magnetic field detection sensors 281 and 282 are closer to each other, the intensity of the magnetic field detected by the sensor 280 may increase. The processor 120 may determine the position of the key input device 300 using at least one of the intensity of the magnetic field detected by the first magnetic field detection sensor 281 or the intensity of the magnetic field detected by the second magnetic field detection sensor 282.

According to an embodiment, the processor 120 may perform a function corresponding to the determined position of the key input device 300. According to an embodiment, the processor 120 may perform the slide-in operation or slide-out operation of the electronic device 101 based on a signal obtained by the sensor 280. For example, the processor 120 may transmit a signal for controlling driving of the motor (e.g., the motor 241 of FIG. 7) to the motor 241.

According to an embodiment, when determining that the key input device 300 is located at the first position L1, the processor 120 may transmit a signal for changing the electronic device 101 to the slide-out state to the motor 241. For example, when the key input device 300 is moved in anupward direction (e.g., the +Z direction) of the electronic device 101 by the user, the processor 120 may drive the motor 241 to change the electronic device 101 to the slide-out state. According to an embodiment, when determining that the key input device 300 is located at the second position L2, the processor 120 may transmit a signal for changing the electronic device 101 to the slide-in state to the motor 241. For example, when the user moves the key input device 300 in a downward direction (e.g., the -Z direction) of the electronic device 101, the processor 120 may drive the motor 241 to change the electronic device 101 to the slide-in state.

According to an embodiment, the processor 120 may perform a specified operation based on a signal obtained by the sensor 280. For example, when determining that the key input device 300 is located at a specified position (e.g., the first position L1 and/or the second position L2), the processor 120 may perform an operation specified by a specified application.

According to an embodiment, the electronic device 101 may include memory (e.g., the memory 130 of FIG. 1). The memory 130 may store information about intensity of a magnetic field detected by the sensor 280 when the key input device 300 is located at specified positions (e.g., the first position L1 and the second position L2). For example, the memory 130 may store a first magnetic field range value detected by the first magnetic field detection sensor 281, when the key input device 300 is located at the first position L1. The memory 130 may store a second magnetic field range value sensed by the second magnetic field detection sensor 282, when the key input device 300 is located at the second position L2.

According to an embodiment (e.g., FIG. 17), the sensor 280 may include a plurality of magnetic field detection sensors 281a, 281b, 282a, and 282b. For example, the first magnetic field detection sensor 281 may include a(1-1)^{th} magnetic field detection sensor 281a (e.g., a first Hall sensor 281a) and a (1-2)^{th}magnetic field detection sensor 281b (e.g., a second Hall sensor 281b) spaced apart from the (1-1)^{th} magnetic field detection sensor 281a. The second magnetic field detection sensor 282 may include a (2-1)^{th} magnetic field detection sensor 282a (e.g., a third Hall sensor 282a) and a (2-2)^{th} magnetic field detection sensor 282b (e.g., a fourth Hall sensor 282b) spaced apart from the (2-1)^{th} magnetic field detection sensor 282a.

According to an embodiment, when the user moves the key input device 300, the processor 120 may determine a position change of the key input device 300 using at least one of the magnetic field detection sensor 281a, 281b, 282a, or 282b. The processor 120 may determine the position of the key input device 300 according to which magnetic field detection sensor 281a, 281b, 282a, or 282b detects a magnetic field.

For example, when a change in the magnetic field is detected by the (1-1)^{th} magnetic field detection sensor 281a, the processor 120 may determine that part (e.g., the magnetic body 320) of the key input device 300 is located at a (1-1)^{th}position L1a. When a change in the magnetic field is detected by the (1-2)^{th} magnetic field detection sensor 281b, the processor 120 may determine that part (e.g., the magnetic body 320) of the key input device 300 is located at a (1-2)^{th} position L1b.When a change in the magnetic field is detected by the (2-1)^{th} magnetic field detection sensor 282a, the processor 120 may determine that part (e.g., the magnetic body 320) of the key input device 300 is located at a (2-1)^{th} position L2a. When a change in the magnetic field is detected by the (2-2)^{th} magnetic field detection sensor 282b, the processor 120 may determine that part (e.g., the magnetic body 320) of the key input device 300 is located at a (2-2)^{th} position L2b.

According to an embodiment, the processor 120 may determine a user input transmitted to the key input device 300 based on the magnetic fields detected by the plurality of Hall sensors 281a, 281b, 282a, and 282b.

The processor 120 may perform various functions using the plurality of Hall sensors 281a, 281b, 282a, and 282b. According to an embodiment, the function performed by the processor 120 may be changed based on the position of the key input device 300 or a distance by which the key input device 300 moves.

According to an embodiment, when determining that the key input device 300 is located at the (1-1)^{th} position L1a, the processor 120 may transmit a signal forchanging the electronic device 101 to the slide-out state to the motor 241. When determining that the key input device 300 is located at the (2-1)^{th} position L2a, the processor 120 may transmit a signal for changing the electronic device 101 to the slide-in state to the motor 241. When determining that the key input device 300 is located at the (1-2)^{th} position L2a and/or the (2-2)^{th} position L2b, the processor 120 may perform an operation specified by a specified application.

According to an embodiment, when determining that the key input device 300 is located at the (1-2)^{th} position L1b, the processor 120 may transmit a signal for changing the electronic device 101 to the slide-out state to the motor 241. When determining that the key input device 300 is located at the (2-2)^{th} position L2b, the processor 120 may transmit a signal for changing the electronic device 101 to the slide-in state to the motor 241. When determining that the key input device 300 is located at the (1-1)^{th} position L1a and/or the (2-1)^{th} position L2a, the processor 120 may perform an operation specified by a specified application.

According to an embodiment, the number of sensors 280 is optional. For example, although a structure in which the sensor 280 includes two or four sensors is shown in the disclosure, the sensor 280 may include more than four sensors or include one sensor.

The structure of the electronic device 101 described with reference to FIG. 16 and/or FIG. 17 may be used together with the afore-described structure of the electronic device 101 (e.g., FIGS. 1 to 15).

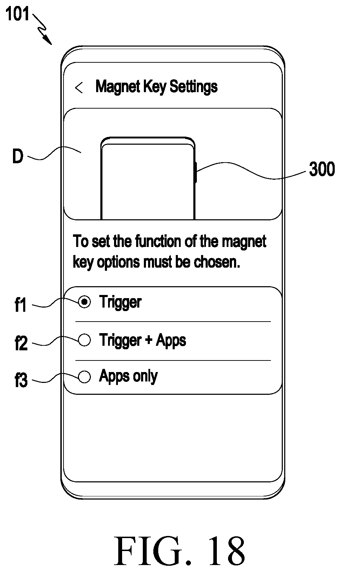

FIG. 18 is a diagram illustrating setting an operation of an electronic device based on information obtained using a key input device according to an embodiment of the disclosure.

Referring to FIG. 18, the electronic device 101 may set a method of using the key input device 300. The configurations of the electronic device 101 and the key input device 300 of FIG. 18 may be wholly or partially identical to those of the electronic device 101 and the key input device 300 of FIG. 1 to 17.

According to an embodiment, the electronic device 101 may use the key input device 300 to set a function implementable by the processor (e.g., the processor 120 of FIG. 1). For example, the electronic device 101 may output a screen for selecting a function implemented by the processor 120 based on information determined by the key input device 300 to the user through a display (e.g., the display 203 of FIG. 2).

According to an embodiment, the electronic device 101 may provide a screen for selecting one of a function f1 for sliding (e.g., triggering) the electronic device 101, a function f2 for executing a specified application, or a functionf3 for sliding movement and execution of a specified application.

According to an embodiment, the electronic device 101 may provide a screen D for providing the position of the key input device 300 to the user.

According to an embodiment, the electronic device 101 may provide a guide sentence for setting a function of the key input device 300 (e.g., a magnet key) to the user. For example, the electronic device 101 may output a sentence "To set the function of the magnetic key, key options must be chosen".

The structure of the electronic device 101 described with reference to FIG. 18 may be used together with the afore-described structure of the electronic device 101 (e.g., FIGS. 1 to 17).

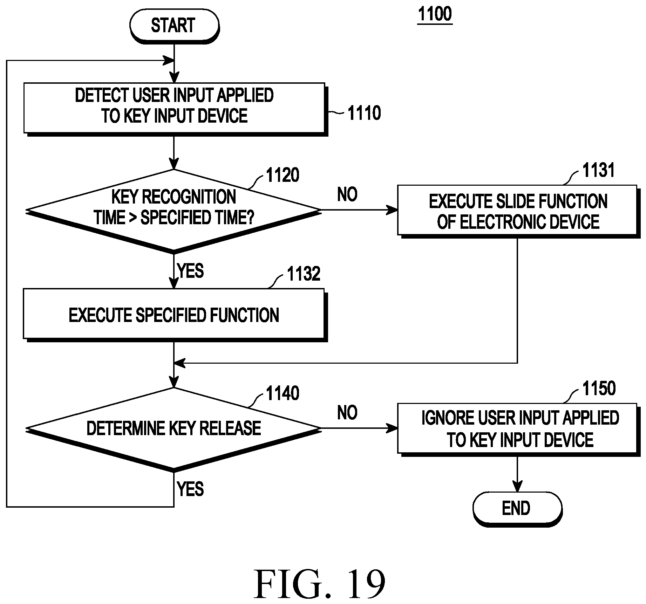

FIG. 19 is a flowchart illustrating an operation of an electronic device for reducing malfunctions according to an embodiment of the disclosure.

Referring to FIG. 19, operation 1100 of an electronic device (e.g., the electronic device 101 of FIG. 1 to 17) may include operation 1110 of detecting a user input applied to a key input device (e.g., the key input device 300 of FIG. 7), operation 1120 of determining whether a time applied to the key input device 300 is equal to or greater than a specified time, operation 1131 of executing a slide function of the electronic device 101, operation 1132 of executing a specified function, and operation 1140 of determining whether the key input device 300 is released and/or operation 1150 of ignoring the user input applied to the key input device 300.

According to an embodiment, operation 1100 of detecting a user input applied to the key input device 300 of the electronic device 101 may include detecting a magnetic field of the key input device 300 using a sensor (e.g., the sensor 280 of FIG. 11). For example, when the user changes the position of the key input device 300, the sensor 280 may detect a change in a magnetic field generated from a magnetic body (e.g., the magnetic body 320 of FIG. 8A) of the key input device 300.

According to an embodiment, the processor 120 may determine a key recognition time using the sensor 280. According to an embodiment, the processor 120 may perform operation 1120 of determining whether the key recognition time exceeds a specified time. The key recognition time may be referred to as a recognition time when the key input device 300 is changed from a reference position L3 to another position (e.g., the first position L1 or the second position L2). The key recognition time may be referred to as a time when a first elastic body (e.g., the first elastic body 311 of FIG. 16) and/or a second elastic body (e.g., the second elastic body 312 of FIG. 16) is compressed by an external force. The specified time may be a time (e.g., 1 second to 5 seconds) stored in memory (e.g., the memory 130 of FIG. 1). The specified time may be changed according to a user setting.

According to an embodiment, when determining that the key recognition time exceeds the specified time, the processor 120 may perform operation 1131 of executing a slide function of the electronic device 101. For example, the processor 120 may execute the slide function of the electronic device 101. The slide function of the electronic device 101 may be referred to as an operation of sliding the electronic device 101 out or in using a motor (e.g., the motor 241 of FIG. 6).

According to an embodiment, the processor 120 may perform operation 1132 of executing the specified function of the electronic device 101. For example, when determining that the key recognition time is equal to or less than the specified time, the processor 120 may execute a function mapped to a current running application. In another example, when determining that the key recognition time is less than the specified time, the processor 120 may execute the specified application.

According to an embodiment, the processor 120 may perform operation 1140 of determining key release. The key release may refer to a state in which the position of the key input device 300 is restored to the reference position L3. For example, the key release may be referred to as a state in whichan elastic force of the first elastic body (e.g., the first elastic body 311 of FIG. 16) and an elastic force of the second elastic body (e.g., the second elastic body 312 of FIG. 16) are substantially equal. After the key input device 300 is released, the processor 120 may wait to recognize a normal input.

According to an embodiment, the processor 120 may perform operation 1150 of ignoring the user input applied to the key input device 300. For example, when the key release is not performed for a specified period of time, the processor 120 may perform an operation to cancel or invalidate an operation based on the user input applied to the key input device 300. When the user input applied to the key input device 300 lasts for a specified time, the processor 120 may slide the electronic device 101 in a direction opposite to a direction of the sliding performed in operation 1131. For example, when the position of the key input device 300 lasts for a certain period of time in a state in which it has been moved in the upward direction of the electronic device 101, the electronic device 101 may perform the slide-in operation after performing the slide-out operation. Unintended operations of the electronic device 101 may be reduced or prevented by operation 1150. For example, state changes of the electronic device 101 caused bya force from the outside of the electronic device 101 may be reduced.

According to an embodiment (not shown), operation 1131 of executing a slide function of the electronic device 101 and/or operation 1132 of executing a specified function may be performed after the key release of the key input device 300.

The method of operating an electronic device illustrated in FIG. 19 may be performed by the afore-described electronic device 101 (e.g., FIGS. 1 to 18).

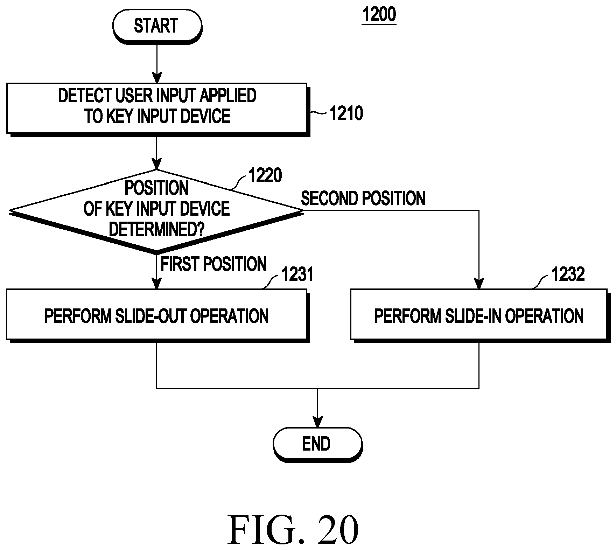

FIG. 20 is a flowchart illustrating an operation of an electronic device according to an embodiment of the disclosure.

Referring to FIG. 20, operation 1200 of an electronic device (e.g., the electronic device 101 of FIG. 2) may include operation 1210 of detecting a user input applied to a key input device (e.g., the key input device 300 of FIG. 7), operation 1220 of determining the position of the key input device 1220, operation 1331 of sliding the electronic device 101 out, and operation 1443 of sliding the electronic device 101 in.

According to an embodiment, operation 1210 of detecting a user input applied to the key input device 300 of the electronic device 101 may include detecting a magnetic field of the key input device 300 using a sensor (e.g., the sensor 280 of FIG. 11). For example, when the user changes the position of the key input device 300, the sensor 280 may detect a change in a magnetic field generated from a magnetic body (e.g., the magnetic body 320 of FIG. 8A) of the key input device 300.

According to an embodiment, the processor 120 may determine the position of the key input device 300 using the sensor 280. For example, upon detection of a change in the magnetic field by the first magnetic field detection sensor 281, the processor 120 may determine that the key input device 300 is located at the first position L1. Upon detection of a change in the magnetic field by the second magnetic field detection sensor 282, the processor 120 may determine that the key input device 300 is located at the second position L2.

According to an embodiment, when determining that the key input device 300 is located at the first position L1, the processor 120 may perform a slide-out operation 1231 of the electronic device 101. For example, when determining that the key input device 300 is located at the first position L1, the processor 120 may transmit a signal for changing the electronic device 101 to the slide-out state to the motor 241.

According to an embodiment, when determining that the key input device 300 is located at the second position L2, the processor 120 may perform a slide-in operation 1232 of the electronic device 101. For example, when determining that the key input device 300 is located at the second position L2, the processor 120 may transmit a signal for changing the electronic device 101 to the slide-in state to the motor 241.

According to an embodiment, when determining that the key input device 300 is not located at the first position L1 or the second position L2, the processor 120 may not transmit a signal for driving the motor 241.

According to an embodiment, the slide-out operation 1231 and/or the slide-in operation 1232 of the electronic device 101 may be performed in a state in which the position of the key input device 300 has been changed. For example, the slide operation of the electronic device 101 may be stopped at a time of key release of the key input device 300. According to an embodiment, a sliding length of the electronic device 101 may be changed based on a time during which the user moves the position of the key input device 300. For example, the user may perform a free stop function using an operation of moving or releasing the key input device 300.

According to an embodiment, the electronic device 101 may completely slide out or completely slide in based on an input applied to the key input device 300.

The method of operating an electronic device described with reference to FIG. 20 may be performed in the afore-described electronic device 101 (e.g., FIGS. 1 to 18).

The method of operating an electronic device described with reference to FIG. 19 may be performed together with or alternatively to the afore-described method of operating an electronic device (e.g., FIG. 19).

An electronic device (e.g., a portable terminal) may include a flat display or a flat and curved display. An electronic device including a display may have limitations in realizing a screen larger than the size of the electronic device due to a fixed display structure. Therefore, electronic devices including rollable displays are under study.

Further, the electronic device may include a key input device (e.g., a button) to obtain a user input. The key input device is disposed on an outermost device of the electronic device. User convenience may increase as the key input device is located closer to a user's grip area (e.g., a lower side surface of a housing). The key input device requires an electric connection toa processor. When circuit boards with the key input device and the processor located thereon reside in the same housing (e.g., a slide housing or a second housing), the distance between the user's grip area and the key input device increases, thereby reducing user convenience.

However, a rollable electronic device requires a structure (e.g., a guide rail) for sliding movement of the electronic device. Accordingly, in an electronic device with a key input device disposed in a user's grip area, a space in which a structure for connection between a processor and the key input device may be small due to the guide rail.

According to an embodiment of the disclosure, an electronic device may be provided, which has a key input device and a user grip area adjacent to each other and thus increases user convenience.

The problems to be solved in the disclosure are not limited to the above-mentioned one and may be extended in various ways without departing from the scope of the disclosure.

According to an embodiment, an electronic device (e.g., the electronic device 101 of FIG. 2) may include a first housing (e.g., the first housing 201 of FIG. 4) including a first cover member (e.g., the first cover member 211 of FIG. 4) and a frame (e.g., the frame 213 of FIG. 4) located inside the first cover member, a second housing (e.g., the second housing 202 of FIG. 4) at least partially accommodated inside the first cover member and configured to move relative to the first housing, a display (e.g., the display 203 of FIG. 3) configured to be moved based on the movement of the second housing, a multi-bar structure (e.g., the multi-bar structure 232 of FIG. 4) supporting at least part of the display, a guide rail (e.g., the guide rail 250 of FIG. 4) including a slit (e.g., the slit 251 of FIG. 4) to guide movement of the multi-bar structure, and connected to the frame, a key input device (e.g., the key input device 300 of FIG. 7) including an elastic body (e.g., the elastic body 310 of FIG. 8A) connected to the first cover member and a magnetic body (e.g., the magnetic body 320 of FIG. 8A) connected to the elastic body, and a sensor (e.g., the sensor 280 of FIG. 11) disposed on the frame and configured to detect a magnetic field of the magnetic body to determine a position of the key input device. The electronic device may further include a multi-bar structure (e.g., the multi-bar structure 232 of FIG. 4) supporting at least part of the display, and a guide rail (e.g., the guide rail 250 of FIG. 4) including a slit (e.g., the slit 251 of FIG. 4) to guide movement of the multi-bar structure. At least part of the guide rail may be located between the key input device and the sensor.

As the sensor 280 detects a user input applied to the key input device 300 including the magnetic body 320, a processor (e.g., the processor 120 of FIG. 1) may not be connected to the key input device 300. Due to exclusion of a component for an electric connection between the key input device 300 and the processor 120, a component (e.g., the guide rail 250) for sliding movement of the electronic device 101 may be located between the key input device 300 and the sensor 280. The use of the sensor 280 detecting the magnetic body 320 may lead to efficient use of the space of the electronic device 101. As the key input device 300 is located in a user's grip area, user convenience may be increased.

According to an embodiment, the electronic device may include a processor (e.g., the processor 120 of FIG. 1) configured to determine a position of the key input device based on the magnetic field of the magnetic body obtained by the sensor.

According to an embodiment, the sensor may include a first magnetic field detection sensor (e.g., the first magnetic field detection sensor 281 of FIG. 16) and a second magnetic field detection sensor (e.g., the second magnetic field detection sensor 282 of FIG. 16).

According to an embodiment, the electronic device may include a driving structure (e.g., the driving structure 240 of FIG. 6) to slidingly move the second housing with respect to the first housing. The driving structure may include a motor (e.g., the motor 241 of FIG. 6) configured to generate a driving force to move the second housing with respect to the first housing and connected to the second housing,a pinion gear (e.g., the pinion gear 244 of FIG. 6) connected to the motor, anda rack (e.g., the rack 242 of FIG. 6) connected to the first housing and configured to mesh with the pinion gear.

According to an embodiment, the sensor may include a first magnetic field detection sensor (e.g., the first magnetic field detection sensor 281 of FIG. 16) configured to detect the magnetic field of the magnetic body and a second magnetic field detection sensor (e.g., the second magnetic field detection sensor 282 of FIG. 16) spaced apart from the first magnetic field detection sensor.

According to an embodiment, the processor may be configured to perform a slide-in operation of the electronic device or a slide-out operation of the electronic device based on signals obtained by the first magnetic field detection sensor and the second magnetic field detection sensor.

According to an embodiment, the processor may be configured to perform a function corresponding to a specified application or a slide operation of the electronic device based on a distance by which the key input device moves.

According to an embodiment, the second housing may include a second cover member (e.g., the second cover member 221 of FIG. 4) accommodating a circuit board (e.g., the first circuit board 248 of FIG. 4) on which the processor is located, and the sensor may be electrically connected to the circuit board.

According to an embodiment, the first cover member may include an accommodation groove (e.g., the accommodation groove 212 of FIG. 7) accommodating at least part of the key input device.

According to an embodiment, the key input device may include an operator (e.g., the operator 330 of FIG. 8B) connected to the elastic body and accommodating at least part of the magnetic body, and a cover unit (e.g., the cover unit 340 of FIG. 8B) covering at least part of the operator and the elastic body. According to an embodiment, the operator may include an accommodation area (e.g., the accommodation area 331 of FIG.8B) surrounding at least part of the magnetic body and a protection area (e.g., the protection area 332 of FIG.8B) extending from the accommodation area and protecting the elastic body from external impact, and wherein the cover unit may include a guide hole (e.g., the guide hole 341 of FIG. 9A) accommodating at least part of the operator.

According to an embodiment, the multi-bar structure may include a multi-bar end (e.g., the multi-bar end 232a of FIG. 14), and the multi-bar end may be located between the key input device and the sensor.

According to an embodiment, the frame may include an outer surface (e.g., the outer surface 213b of FIG. 14) facing the guide rail and an inner surface (e.g., the inner surface 213a of FIG. 14) accommodating the sensor.

According to an embodiment, the electronic device may further include memory (e.g., the memory 130 of FIG. 1) disposed inside at least one of the first housing or the second housing. The memory may be configured to store information about anintensity of a magnetic field detected by the sensor, when the magnetic body is located at a specified position. The processor may be configured to determine the position of the key input device in consideration of the intensity of the magnetic field stored in the memory.

According to an embodiment, the electronic device may further include a linear motion guide structure (e.g., the linear motion guide structure 260 of FIG. 15) at least partially located in a space (e.g., the space S of FIG. 15) between the key input device and the sensor and configured to guide movement of the second housing relative to the first housing.

According to an embodiment, the display may include a first display area (e.g., the first display area A1 of FIG. 3) connected to the second housing and a second display area (e.g., the second display area A2 of FIG. 3) extending from the first display area and at least partially connected to the multi-bar structure.

According to an embodiment of the disclosure, an electronic device (e.g., the electronic device 101of FIG. 3) may include a housing (e.g., the housing 210 of FIG. 3) including a first housing (e.g., the first housing 201 of FIG. 4) including a first cover member (e.g., the first cover member 211 of FIG. 1) and a frame (e.g., the frame 213 of FIG. 4) located inside the first cover member, and a second housing (e.g., the second housing 202 of FIG. 4) at least partially surrounded by the first housing and configured to slidingly move with respect to the first housing, a display (e.g., the display 203 of FIG. 4) configured to be moved based on the sliding movement of the second housing, a key input device (e.g., the key input device 300 of FIG. 7) including an elastic body connected to the first cover member and a magnetic body connected to the elastic body, a sensor (e.g., the sensor 280 of FIG. 16) including a first magnetic field detection sensor (e.g., the first magnetic field detection sensor 281 of FIG. 16) configured to detect a magnetic field of the magnetic body at a first position (e.g., the first position L1 of FIG. 16) and a second magnetic field detection sensor (e.g., the second magnetic field detection sensor 282 of FIG. 16) configured to detect the magnetic field of the magnetic body at a second position (e.g., the second position L2 of FIG. 16), and a processor (e.g., the processor 120 of FIG. 1) configured to determine a position of the key input device based on a signal obtained by the sensor.

According to an embodiment, the processor may be configured to slide the electronic device out based on a signal obtained by the first magnetic field detection sensor, and the processor may be configured to slide the electronic device in based on a signal obtained by the second magnetic field detection sensor.

According to an embodiment, the processor may be configured to perform a function corresponding to a specified application or a slide operation of the electronic device based on a distance by which the key input device moves.

According to an embodiment, the electronic device may further include a multi-bar structure (e.g., the multi-bar structure 232 of FIG. 4) supporting at least part of the display, and a guide rail (e.g., the guide rail 250 of FIG. 4) connected to the frame and guiding movement of the multi-bar structure. At least part of the guide rail and at least part of the multi-bar structure may be located between the key input device and the sensor.

According to an embodiment of the disclosure, a method of operating an electronic device (e.g., the operation method 1100 of FIG. 18) may include detecting a user input applied to a key input device including a magnetic body (e.g., operation 1110 of FIG. 18), determining whether a key recognition time exceeds a specified time (e.g., operation 1120 of FIG. 18), when the key recognition time exceeds the specified time, executing a slide function of the electronic device (e.g., operation 1131 of FIG. 18), determining key release of the key input device (e.g., operation 1140 of FIG. 18), andwhen the key release of the key input device is determined, ignoring the user input applied to the key input device (e.g., operation 1150 of FIG. 18).

The above-described electronic device including a key input device of the disclosure is not limited by the foregoing embodiments and drawings, and it will be apparent to those skilled in the art that many replacements, changes, and modifications can be made within the technical scope of the disclosure.

## Claims

1. An electronic device (101) comprising:
a first housing (201) including a first cover member (211) and a frame (213) located inside the first cover member (211);
a second housing (202) at least partially accommodated inside the first cover member (211) and configured to move relative to the first housing (201);
a display (203, 231) configured to be moved based on the movement of the second housing (202);
a key input device (245, 300) including an elastic body (310) connected to the first cover member (211) and a magnetic body (320) connected to the elastic body (310);
a sensor (280) disposed on the frame (213) and configured to detect a magnetic field of the magnetic body (320) to determine a position of the key input device (245, 300);
a multi-bar structure (232) supporting at least part of the display (203, 231); and
a guide rail (250) configured to guide movement of the multi-bar structure (232), and connected to the frame (213);
wherein at least part of the guide rail (250) is located between the key input device (245, 300) and the sensor (280).

2. The electronic device of claim 1, wherein the frame includes an outer surface (213b) facing the guide rail and an inner surface (213c) accommodating the sensor.

3. The electronic device of claim 1 or 2, further comprising a driving structure (240) to slidingly move the second housing with respect to the first housing, the driving structure (240) comprising:
a motor (241) configured to generate a driving force to move the second housing with respect to the first housing and connected to the second housing,
a pinion gear (244) connected to the motor, and
a rack (242) connected to the first housing and configured to mesh with the pinion gear.

4. The electronic device of any one of the preceding claims, further comprising a processor (120) configured to determine the position of the key input device based on the magnetic field of the magnetic body obtained by the sensor.

5. The electronic device of any one of claims 1 to 3, wherein the sensor includes a first magnetic field detection sensor (281) configured to detect the magnetic field of the magnetic body at a first position and a second magnetic field detection sensor (282) spaced apart from the first magnetic field detection sensor and configured to detect the magnetic field of the magnetic body at a second position.

6. The electronic device of claim 5, further comprising a processor (120) configured to perform a slide-in operation of the electronic device or a slide-out operation of the electronic device based on signals obtained by the first magnetic field detection sensor and the second magnetic field detection sensor.

7. The electronic device of any one of claims 1 to 3, further comprising a processor (120) configured to perform a function corresponding to a specified application or a slide operation of the electronic device based on a distance by which the key input device moves.

8. The electronic device of any one of claims 1 to 3, wherein the second housing includes a second cover member accommodating a circuit board (248) on which a processor (120) is located, and
wherein the sensor is electrically connected to the circuit board.

9. The electronic device of any one of claims 1 to 3, further comprising a processor (120), and a memory (130) disposed inside at least one of the first housing or the second housing,
wherein the memory is configured to store information about an intensity of a magnetic field detected by the sensor, when the magnetic body is located at a specified position, and
wherein the processor is configured to determine the position of the key input device in consideration of the intensity of the magnetic field stored in the memory.

10. The electronic device of any one of claims 2 to 9, wherein the first cover member includes an accommodation groove accommodating at least part of the key input device.

11. The electronic device of any one of the preceding claims, wherein the key input device includes an operator (330) connected to the elastic body and accommodating at least part of the magnetic body, and a cover unit (340) covering at least part of the operator and at least part of the elastic body.

12. The electronic device of claim 11, wherein the operator includes an accommodation area (331) surrounding at least part of the magnetic body and a protection area (332) extending from the accommodation area and configured to protect the elastic body from external impact, and
wherein the cover unit includes a guide hole (341) accommodating at least part of the operator.

13. The electronic device of any one of the preceding claims, further comprising a linear motion guide structure (260) at least partially located in a space between the key input device and the sensor and configured to guide movement of the second housing relative to the first housing.

14. The electronic device (101) of any one of claims 1 to 3, wherein the sensor (280) comprises a first magnetic field detection sensor (281) configured to detect a magnetic field of the magnetic body at a first position (L1) and a second magnetic field detection sensor (282) configured to detect the magnetic field of the magnetic body at a second position (L2); and
wherein the electronic device (101) further comprises a processor (120) configured to determine the position of the key input device based on a signal obtained by the sensor,
wherein the processor is configured to slide the electronic device out based on a signal obtained by the first magnetic field detection sensor, and
wherein the processor is configured to slide the electronic device in based on a signal obtained by the second magnetic field detection sensor.

## Patentansprüche

1. Elektronische Vorrichtung (101), umfassend:
ein erstes Gehäuse (201), das ein erstes Abdeckelement (211) und einen Rahmen (213), der sich innerhalb des ersten Abdeckelements (211) befindet, beinhaltet;
ein zweites Gehäuse (202), das zumindest teilweise innerhalb des ersten Abdeckelements (211) aufgenommen und dazu konfiguriert ist, sich relativ zu dem ersten Gehäuse (201) zu bewegen;
eine Anzeige (203, 231), die dazu konfiguriert ist, basierend auf der Bewegung des zweiten Gehäuses (202) bewegt zu werden;
eine Tasteneingabevorrichtung (245, 300), die einen elastischen Körper (310), der mit dem ersten Abdeckelement (211) verbunden ist, und einen Magnetkörper (320), der mit dem elastischen Körper (310) verbunden ist, beinhaltet;
einen Sensor (280), der an dem Rahmen (213) angeordnet und dazu konfiguriert ist, ein Magnetfeld des Magnetkörpers (320) zu detektieren, um eine Position der Tasteneingabevorrichtung (245, 300) zu bestimmen;
eine Mehrstangenstruktur (232), die zumindest Teil der Anzeige (203, 231) stützt; und
eine Führungsschiene (250), die dazu konfiguriert ist, Bewegung der Mehrstangenstruktur (232) zu führen, und mit dem Rahmen (213) verbunden ist;
wobei sich zumindest Teil der Führungsschiene (250) zwischen der Tasteneingabevorrichtung (245, 300) und dem Sensor (280) befindet.

2. Elektronische Vorrichtung nach Anspruch 1, wobei der Rahmen eine Außenfläche (213b), die der Führungsschiene zugewandt ist, und eine Innenfläche (213c), die den Sensor aufnimmt, beinhaltet.

3. Elektronische Vorrichtung nach Anspruch 1 oder 2, ferner umfassend eine Antriebsstruktur (240), um das zweite Gehäuse in Bezug auf das erste Gehäuse schiebend zu bewegen, wobei die Antriebsstruktur (240) Folgendes umfasst:
einen Motor (241), der dazu konfiguriert ist, eine Antriebskraft zu erzeugen, um das zweite Gehäuse in Bezug auf das erste Gehäuse zu bewegen, und mit dem zweiten Gehäuse verbunden ist,
ein Ritzel (244), das mit dem Motor verbunden ist, und
eine Zahnstange (242), die mit dem ersten Gehäuse verbunden und dazu konfiguriert ist, mit dem Ritzel zu kämmen.

4. Elektronische Vorrichtung nach einem der vorhergehenden Ansprüche, ferner umfassend einen Prozessor (120), der dazu konfiguriert ist, die Position der Tasteneingabevorrichtung basierend auf dem Magnetfeld des Magnetkörpers, das durch den Sensor erhalten wird, zu bestimmen.

5. Elektronische Vorrichtung nach einem der Ansprüche 1 bis 3, wobei der Sensor einen ersten Magnetfelddetektionssensor (281), der dazu konfiguriert ist, das Magnetfeld des Magnetkörpers an einer ersten Position zu detektieren, und einen zweiten Magnetfelddetektionssensor (282), der von dem ersten Magnetfelddetektionssensor beabstandet und dazu konfiguriert ist, das Magnetfeld des Magnetkörpers an einer zweiten Position zu detektieren, beinhaltet.

6. Elektronische Vorrichtung nach Anspruch 5, ferner umfassend einen Prozessor (120), der dazu konfiguriert ist, einen Einschiebevorgang der elektronischen Vorrichtung oder einen Herausschiebevorgang der elektronischen Vorrichtung basierend auf Signalen, die durch den ersten Magnetfelddetektionssensor und den zweiten Magnetfelddetektionssensor erhalten werden, durchzuführen.

7. Elektronische Vorrichtung nach einem der Ansprüche 1 bis 3, ferner umfassend einen Prozessor (120), der dazu konfiguriert ist, eine Funktion entsprechend einer spezifizierten Anwendung oder einem Schiebevorgang der elektronischen Vorrichtung basierend auf einer Distanz, um die sich die Tasteneingabevorrichtung bewegt, durchzuführen.

8. Elektronische Vorrichtung nach einem der Ansprüche 1 bis 3, wobei das zweite Gehäuse ein zweites Abdeckelement beinhaltet, das eine Leiterplatte (248) aufnimmt, auf der sich ein Prozessor (120) befindet, und
wobei der Sensor elektrisch mit der Leiterplatte verbunden ist.

9. Elektronische Vorrichtung nach einem der Ansprüche 1 bis 3, ferner umfassend einen Prozessor (120) und einen Speicher (130), der innerhalb von zumindest einem von dem ersten Gehäuse oder dem zweiten Gehäuse angeordnet ist,
wobei der Speicher dazu konfiguriert ist, Informationen über eine Intensität eines Magnetfeldes, das durch den Sensor detektiert wird, zu speichern, wenn sich der Magnetkörper an einer spezifizierten Position befindet, und
wobei der Prozessor dazu konfiguriert ist, die Position der Tasteneingabevorrichtung unter Berücksichtigung der Intensität des Magnetfeldes, das in dem Speicher gespeichert ist, zu bestimmen.

10. Elektronische Vorrichtung nach einem der Ansprüche 2 bis 9, wobei das erste Abdeckelement eine Aufnahmenut beinhaltet, die zumindest Teil der Tasteneingabevorrichtung aufnimmt.

11. Elektronische Vorrichtung nach einem der vorhergehenden Ansprüche, wobei die Tasteneingabevorrichtung einen Bediener (330), der mit dem elastischen Körper verbunden ist und zumindest Teil des Magnetkörpers aufnimmt, und eine Abdeckeinheit (340), die zumindest Teil des Bedieners und zumindest Teil des elastischen Körpers bedeckt, beinhaltet.

12. Elektronische Vorrichtung nach Anspruch 11, wobei der Bediener einen Aufnahmebereich (331), der zumindest Teil des Magnetkörpers umgibt, und einen Schutzbereich (332), der sich von dem Aufnahmebereich erstreckt und dazu konfiguriert ist, den elastischen Körper vor äußeren Stößen zu schützen, beinhaltet, und
wobei die Abdeckeinheit ein Führungsloch (341) beinhaltet, das zumindest Teil des Bedieners aufnimmt.

13. Elektronische Vorrichtung nach einem der vorhergehenden Ansprüche, ferner umfassend eine Linearbewegungsführungsstruktur (260), die sich zumindest teilweise in einem Raum zwischen der Tasteneingabevorrichtung und dem Sensor befindet und dazu konfiguriert ist, Bewegung des zweiten Gehäuses relativ zu dem ersten Gehäuse zu führen.

14. Elektronische Vorrichtung (101) nach einem der Ansprüche 1 bis 3, wobei der Sensor (280) einen ersten Magnetfelddetektionssensor (281), der dazu konfiguriert ist, ein Magnetfeld des Magnetkörpers an einer ersten Position (L1) zu detektieren, und einen zweiten Magnetfelddetektionssensor (282), der dazu konfiguriert ist, das Magnetfeld des Magnetkörpers an einer zweiten Position (L2) zu detektieren, umfasst; und
wobei die elektronische Vorrichtung (101) ferner einen Prozessor (120) umfasst, der dazu konfiguriert ist, die Position der Tasteneingabevorrichtung basierend auf einem Signal, das durch den Sensor erhalten wird, zu bestimmen,
wobei der Prozessor dazu konfiguriert ist, die elektronische Vorrichtung basierend auf einem Signal, das durch den ersten Magnetfelddetektionssensor erhalten wird, herauszuschieben, und
wobei der Prozessor dazu konfiguriert ist, die elektronische Vorrichtung basierend auf einem Signal, das durch den zweiten Magnetfelddetektionssensor erhalten wird, einzuschieben.

## Revendications

1. Dispositif électronique (101) comprenant :
un premier boîtier (201) comprenant un premier élément de couvercle (211) et un cadre (213) situé à l'intérieur du premier élément de couvercle (211) ;
un second boîtier (202) reçu, au moins partiellement, à l'intérieur du premier élément de couvercle (211) et conçu pour se déplacer par rapport au premier boîtier (201) ;
un dispositif d'affichage (203, 231) conçu pour être déplacé sur la base du déplacement du second boîtier (202) ;
un dispositif d'entrée à touches (245, 300) comprenant un corps élastique (310) relié au premier élément de couvercle (211) et un corps magnétique (320) relié au corps élastique (310) ;
un capteur (280) disposé sur le cadre (213) et configuré pour détecter un champ magnétique du corps magnétique (320) afin de déterminer une position du dispositif d'entrée à touches (245, 300) ;
une structure à barres multiples (232) supportant au moins une partie du dispositif d'affichage (203, 231) ; et
un rail de guidage (250) conçu pour guider le déplacement de la structure à barres multiples (232), et relié au cadre (213) ;
dans lequel au moins une partie du rail de guidage (250) est située entre le dispositif d'entrée à touches (245, 300) et le capteur (280).

2. Dispositif électronique de la revendication 1, dans lequel le cadre comprend une surface externe (213b) faisant face au rail de guidage et une surface interne (213c) recevant le capteur.

3. Dispositif électronique de l'une des revendications 1 ou 2, comprenant en outre une structure d'entraînement (240) pour déplacer de manière coulissante le second boîtier par rapport au premier boîtier, la structure d'entraînement (240) comprenant :
un moteur (241) conçu pour générer une force d'entraînement afin de déplacer le second boîtier par rapport au premier boîtier et relié au second boîtier,
un pignon (244) relié au moteur, et
une crémaillère (242) reliée au premier boîtier et conçue pour s'engrener avec le pignon.

4. Dispositif électronique de l'une quelconque des revendications précédentes, comprenant en outre un processeur (120) configuré pour déterminer la position du dispositif d'entrée à touches sur la base du champ magnétique du corps magnétique obtenu par le capteur.

5. Dispositif électronique de l'une quelconque des revendications 1 à 3, dans lequel le capteur comprend un premier capteur de détection de champ magnétique (281) configuré pour détecter le champ magnétique du corps magnétique à une première position et un second capteur de détection de champ magnétique (282) espacé du premier capteur de détection de champ magnétique et configuré pour détecter le champ magnétique du corps magnétique à une seconde position.

6. Dispositif électronique de la revendication 5, comprenant en outre un processeur (120) configuré pour réaliser une opération de coulissement vers l'intérieur du dispositif électronique ou une opération de coulissement vers l'extérieur du dispositif électronique sur la base de signaux obtenus par le premier capteur de détection de champ magnétique et le second capteur de détection de champ magnétique.

7. Dispositif électronique de l'une quelconque des revendications 1 à 3, comprenant en outre un processeur (120) configuré pour réaliser une fonction correspondant à une application spécifiée ou une opération de coulissement du dispositif électronique sur la base d'une distance parcourue par le déplacement du dispositif d'entrée à touches.

8. Dispositif électronique de l'une quelconque des revendications 1 à 3, dans lequel le second boîtier comprend un second élément de couvercle recevant une carte de circuit imprimé (248) sur laquelle est situé un processeur (120), et
dans lequel le capteur est connecté électriquement à la carte de circuit.

9. Dispositif électronique de l'une quelconque des revendications 1 à 3, comprenant en outre un processeur (120), et une mémoire (130) disposée à l'intérieur d'au moins l'un du premier boîtier ou du second boîtier,
dans lequel la mémoire est configurée pour stocker des informations sur une intensité d'un champ magnétique détecté par le capteur, lorsque le corps magnétique est situé à une position spécifiée, et
dans lequel le processeur est configuré pour déterminer la position du dispositif d'entrée à touches en tenant compte de l'intensité du champ magnétique stocké dans la mémoire.

10. Dispositif électronique de l'une quelconque des revendications 2 à 9, dans lequel le premier élément de couvercle comprend une rainure de réception recevant au moins une partie du dispositif d'entrée à touches.

11. Dispositif électronique de l'une quelconque des revendications précédentes, dans lequel le dispositif d'entrée à touches comprend un opérateur (330) relié au corps élastique et recevant au moins une partie du corps magnétique, et une unité de couvercle (340) recouvrant au moins une partie de l'opérateur et au moins une partie du corps élastique.

12. Dispositif électronique de la revendication 11, dans lequel l'opérateur comprend une zone de réception (331) entourant au moins une partie du corps magnétique et une zone de protection (332) s'étendant à partir de la zone de réception et conçue pour protéger le corps élastique contre les chocs externes, et
dans lequel l'unité de couvercle comprend un trou de guidage (341) recevant au moins une partie de l'opérateur.

13. Dispositif électronique de l'une quelconque des revendications précédentes, comprenant en outre une structure de guidage à mouvement linéaire (260) située, au moins partiellement, dans un espace entre le dispositif d'entrée à touches et le capteur et conçue pour guider le déplacement du second boîtier par rapport au premier boîtier.

14. Dispositif électronique (101) de l'une quelconque des revendications 1 à 3, dans lequel le capteur (280) comprend un premier capteur de détection de champ magnétique (281) configuré pour détecter un champ magnétique du corps magnétique à une première position (L1) et un second capteur de détection de champ magnétique (282) configuré pour détecter le champ magnétique du corps magnétique à une seconde position (L2) ; et
dans lequel le dispositif électronique (101) comprend en outre un processeur (120) configuré pour déterminer la position du dispositif d'entrée à touches sur la base d'un signal obtenu par le capteur,
dans lequel le processeur est configuré pour faire coulisser le dispositif électronique vers l'extérieur sur la base d'un signal obtenu par le premier capteur de détection de champ magnétique, et
dans lequel le processeur est configuré pour faire coulisser le dispositif électronique vers l'intérieur sur la base d'un signal obtenu par le second capteur de détection de champ magnétique.
